(19) Europäisches Patentamt
European Patent Office
Office européen des brevets

(11) **EP 2 540 787 A1**

(12) **EUROPEAN PATENT APPLICATION**

(43) Date of publication:
**02.01.2013 Bulletin 2013/01**

(51) Int Cl.:
*C09J 7/00* (2006.01)       *C09J 133/06* (2006.01)
*C09J 133/14* (2006.01)       *C09J 7/02* (2006.01)

(21) Application number: **12173827.2**

(22) Date of filing: **27.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.06.2011   JP 2011142649**
**15.02.2012   JP 2012030973**

(71) Applicant: **NITTO DENKO CORPORATION**
**Ibaraki-shi, Osaka 567-8680 (JP)**

(72) Inventors:
• **Hoshino, Shinji**
  **Ibaraki-shi, Osaka (JP)**
• **Fujita, Masato**
  **Ibaraki-shi, Osaka (JP)**
• **Nonaka, Takahiro**
  **Ibaraki-shi, Osaka (JP)**

(74) Representative: **Grünecker, Kinkeldey,**
**Stockmair & Schwanhäusser**
**Leopoldstrasse 4**
**80802 München (DE)**

(54) **Optical double-sided pressure-sensitive adhesive sheet and separating method for separating members laminated with the sheet**

(57)    The present invention provides an optical double-sided pressure-sensitive adhesive sheet excellent in reworkability, step absorbability and anti-foaming release property. The invention relates to an optical double-sided pressure-sensitive adhesive sheet including an acrylic pressure-sensitive adhesive layer which contains an acrylic polymer (X), wherein: the acrylic polymer (X) is formed from a monomer component including an alkyl (meth)acrylate having a linear or branched alkyl group having 1 to 14 carbon atoms in an amount of 50 to 100 wt% based on a total amount of the monomer component (100 wt%) forming the acrylic polymer (X), and a content of a polar group-containing monomer is 0 to 15.0 wt% based on the total amount thereof; and a gel fraction of the acrylic pressure-sensitive adhesive layer is from 20 to 74 wt%.

*FIG. 1*

**Description**

BACKGROUND OF THE INVENTION

Technical Field

The present invention relates to an optical double-sided pressure-sensitive adhesive sheet. Precisely, the present invention relates to an optical double-sided pressure-sensitive adhesive sheet usable preferably in the lamination of optical members and in the manufacture of optical products, etc, The present invention also relates to an optical member, a touch panel and an image display device, which include the optical double-sided pressure-sensitive adhesive sheet, Further, the present invention relates to a method for separating two optical members laminated through the optical double-sided pressure-sensitive adhesive sheet.

Background Art

Recently, in various fields, display devices such as a liquid crystal display (LCD) or an input device used by combining with the display device, such as a touch panel, has been widely used. In manufacturing of the display device or the input device, a transparent pressure-sensitive adhesive sheet is used for laminating an optical member. For example, the transparent pressure-sensitive adhesive sheet is used for laminating the touch panel or lens and a liquid crystal device (LCD or the like) (for example, see Patent Documents 1 to 3).
Patent Document 1: JP 2003-238915 A
Patent Document 2: JP 2003-342542 A
Patent Document 3: JP 2004-231723 A

SUMMARY OF THE INVENTION

Regarding pressure-sensitive adhesive sheets for use for the above-mentioned purposes, recently, the demand that the optical members once laminated be removed (reworked) when they are needed to be re-laminated has increased. However, the above-mentioned conventional pressure-sensitive adhesive sheets are difficult to rework especially when used for laminating high-rigidity optical members, such as glasses, and therefore the above-mentioned requirements could not be sufficiently satisfied.
In addition, with the expansion of the applicability of display devices and input devices, the pressure-sensitive adhesive sheet for use in such devices has become required to fully exhibit the pressure-sensitive adhesive characteristics thereof in various environments. For example, the pressure-sensitive adhesive sheet is required to have the property resistant to foaming or release in high-temperature environments or in high-temperature high-humidity environments (anti-foaming release property).
further, among optical members, those having a step such as printing step or the like have increased. For example, there is a case where a lens member with a frame printed thereon is laminated onto a liquid-crystal display device through a double-sided pressure-sensitive adhesive sheet. In such use, the pressure-sensitive adhesive sheet is required to have the property of filling the step such as printing step or the like, that is, the property of excellent step absorbability (hereinafter this may also be referred to as "step followability").
Consequently, an object of the present invention is to provide an optical double-sided pressure-sensitive adhesive sheet excellent in reworkability, step absorbability and anti-foaming release property.
As a result of the intensive studies, the present inventors have found that an optical double-sided pressure-sensitive adhesive sheet which is excellent in reworkability, step absorbability and anti-foaming release property by including an acrylic pressure-sensitive adhesive layer which includes an acrylic polymer formed from a specific monomer component and has a specific gel fraction, and thus, the present invention has been accomplished.
That is, the present invention provides an optical double-sided pressure-sensitive adhesive sheet including an acrylic pressure-sensitive adhesive layer which contains an acrylic polymer (X), wherein:

the acrylic polymer (X) is formed from a monomer component including an alkyl (meth)acrylate having a linear or branched alkyl group having 1 to 14 carbon atoms,
a content of the alkyl (meth)acrylate having a linear or branched alkyl group having 1 to 14 carbon atoms is from 50 to 100 wt% based on a total amount of the monomer component (100 wt%) forming the acrylic polymer (X), and
a content of a polar group-containing monomer is from 0 to 15.0 wt% based on a total amount of the monomer component (100 wt%) forming the acrylic polymer (X), and

a gel fraction of the acrylic pressure-sensitive adhesive layer is from 20 to 74 wt%.

In the optical double-sided pressure-sensitive adhesive sheet, the polar group-containing monomer is preferably selected from the group consisting of a carboxyl group-containing monomer, a hydroxyl group-containing monomer and a nitrogen atom-containing monomer.

In the optical double-sided pressure-sensitive adhesive sheet, the monomer, component forming the acrylic polymer (X) preferably further includes an alicylic monomer, and a content of the alicyclic monomer is preferably 0.5 wt% or more and less than 10 wt% based on a total amount of the monomer component (100 wt%) forming the acrylic polymer (X).

In the optical double-sided pressure-sensitive adhesive sheet, the acrylic polymer (X) is preferably formed by an active energy-ray polymerization.

The optical double-sided pressure-sensitive adhesive sheet is preferably a substrateless double-sided pressure-sensitive adhesive sheet consisting of the acrylic pressure-sensitive adhesive layer.

The optical double-sided pressure-sensitive adhesive sheet preferably has a total light transmittance of 87% or more and a haze of 3.0% or less,

In addition, the present invention also provides an optical double-sided pressure-sensitive adhesive sheet, wherein an adherend A and an adherend B, which are laminated through the optical double-sided pressure-sensitive adhesive sheet, can be separated in the following removing test, and after the adherend A and the adhered B are separated from each other, a pressure-sensitive adhesive remains on both of the adherend A and the adherend B:

Removing test: one pressure-sensitive adhesive surface of the optical double-sided pressure-sensitive adhesive sheet (size: 100 mm length × 50 mm width) is laminated to a surface of a polarizing film of the following adherend A and the other pressure-sensitive adhesive surface thereof is laminated to a surface of the following adherend B, thereby preparing a test piece (size: 100 mm length × 50 mm width) having a configuration of slide glass/polarizing film/optical double-sided pressure-sensitive adhesive sheet/slide glass, and the test piece is left in the environment of 23°C and 50% RH for 1 hour, and thereafter, while the adherend A is fixed, the adherend B is rotated in the plane perpendicular to the thickness direction of the optical double-sided pressure-sensitive adhesive sheet to thereby separate the adherend B from the adherend A;
adherend A: a laminate (size: 100 mm length × 50 mm width) of a slide glass (thickness 0.7 mm, size: 100 mm length × 50 mm width) and a polarizing film (size: 100 mm length × 50 mm width);
adherend B; a slide glass (thickness 0.7 mm, size: 100 mm length × 50 mm width).

The present invention also provides an optical member including the optical double-sided pressure-sensitive adhesive sheet.

The present invention also provides a touch panel including the optical double-sided pressure-sensitive adhesive sheet.

The present invention also provides an image display device including the optical double-sided pressure-sensitive adhesive sheet.

The present invention also provides a separating method, including separating two optical members laminated through the optical double-sided pressure-sensitive adhesive sheet.

In the separating method, the two optical members are preferably moved relatively parallel to each other thereby producing a shear stress to break the optical double-sided pressure-sensitive adhesive sheet.

The optical double-sided pressure-sensitive adhesive sheet of the present invention has the above-mentioned structural characteristics, and therefore, in the case where the adherends (optical members or the like) laminated through the optical double-sided pressure-sensitive adhesive sheet of the present invention are separated, cohesive failure of the acrylic pressure-sensitive adhesive layer of the double-sided pressure-sensitive adhesive sheet is easily occurred that the adherends can be readily separated, and the pressure-sensitive adhesive sheet is therefore excellent in reworkability (removability). In particular, in the case where high-rigidity adherends are laminated through the double-sided pressure-sensitive adhesive sheet, the pressure-sensitive adhesive sheet is excellent in reworkability. Moreover, the pressure-sensitive adhesive sheet is also excellent in step absorbability and anti-foaming release property. Consequently, the optical double-sided pressure-sensitive adhesive sheet of the present invention is useful for laminating optical members, and for producing optical members and optical products, etc.

BRIEF DESCRIPTION OF THE DRAWINGS

Fig. 1 is an explanatory view (plan view) schematically showing the fixed state of the test piece and the adhered state of the test piece and the stainless plate in a removing test.

Fig. 2 is an explanatory view (plan view) schematically showing the state of moving the stainless plate in the removing test.

Fig. 3 is an outline view (plan view) showing the glass plate with the printing step, which is used in evaluation of step absorbability.

Fig. 4 is an outline view (A-A' line-cut end view in Fig. 3) showing the glass plate with the printing step, which is used in evaluation of step absorbability.

DETAILED DESCRIPTION OF THE INVENTION

Embodiments of the present invention are described in detail hereinunder.

The optical double-sided pressure-sensitive adhesive sheet of the present invention is a double-sided pressure-sensitive adhesive sheet including at least one acrylic pressure-sensitive adhesive layer which contains an acrylic polymer (X) mentioned below and has a gel fraction of from 20 to 74 wt%. In this description, the "acrylic pressure-sensitive adhesive layer which contains an acrylic polymer (X) and has a gel fraction of from 20 to 74 wt%" may be referred to as "the acrylic pressure-sensitive adhesive layer in the present invention" or "the pressure-sensitive adhesive layer in the present invention'". The optical double-sided pressure-sensitive adhesive sheet of the present invention may be referred to simply as "the double-sided pressure-sensitive adhesive sheet of the present invention" or the "pressure-sensitive adhesive sheet of the present invention".

In the double-sided pressure-sensitive adhesive sheet of the present invention, both surfaces of the sheet are pressure-sensitive adhesive surfaces (pressure-sensitive adhesive layer surfaces). Consequently, the sheet is especially favorably used for laminating two optical members. The "double-sided pressure-sensitive adhesive sheet" is meant to include a "double-sided pressure-sensitive adhesive tape". Specifically, the double-sided pressure-sensitive adhesive sheet of the present invention may also be a double-sided pressure-sensitive adhesive tape in a tape shape.

The double-sided pressure-sensitive adhesive sheet of the present invention may be a "substrateless type" double-sided pressure-sensitive adhesive sheet (hereinafter referred to as "substrateless double-sided pressure-sensitive adhesive sheet" in some cases) that does not have a substrate (substrate layer), or may be a double-sided pressure-sensitive adhesive sheet with a substrate. The substrateless double-sided pressure-sensitive adhesive sheet may be, for example, a double-sided pressure-sensitive adhesive sheet consisting of the acrylic pressure-sensitive adhesive layer of the present invention, a double-sided pressure-sensitive adhesive sheet including the acrylic pressure-sensitive adhesive layer of the present invention and a pressure-sensitive adhesive layer other than the acrylic pressure-sensitive adhesive layer of the present invention (hereinafter, also referred to as "other pressure-sensitive adhesive layer" in some cases), and the like. The double-sided pressure-sensitive adhesive sheet with a substrate is a double-sided pressure-sensitive adhesive sheet including the acrylic pressure-sensitive adhesive layer of the present invention on at least one side of the substrate. The double-sided pressure-sensitive adhesive sheet with a substrate may be, for example, a double-sided pressure-sensitive adhesive sheet including the acrylic pressure-sensitive adhesive layers of the present invention on both sides of the substrate, a double-sided pressure-sensitive adhesive sheet including the acrylic pressure-sensitive adhesive layer of the present invention on one side of the substrate and the other pressure-sensitive adhesive sheet on the other side of the substrate, and the like. Among them, from the viewpoint of improving optical properties such as transparency, the substrateless double-sided pressure-sensitive adhesive sheet is preferable, and the substrateless double-sided pressure-sensitive adhesive sheet consisting of the acrylic pressure-sensitive adhesive layer of the present invention is more preferable. In the "substrate (substrate layer)", a separator (release liner) to be released when the double-sided pressure-sensitive adhesive sheet is used (laminated) is not included.

[Acrylic pressure-sensitive adhesive layer in the present invention]

The acrylic pressure-sensitive adhesive layer in the present invention contains at least an acrylic polymer (X). The layer is not particularly limited, but the layer preferably contains an acrylic polymer (X) as the main component thereof. In this description, the wording "contains an acrylic polymer (X) as the main component thereof" means that the content of the acrylic polymer (X) in the acrylic pressure-sensitive adhesive layer (100 wt%) in the present invention is 50 wt% or more. The pressure-sensitive adhesive layer in the present invention preferably contains a silane coupling agent in addition to the acrylic polymer (X), and if desired, may contain any other additive. The components (acrylic polymer (X), silane coupling agent, other additive) each may be used either alone or in combination of two or more kinds thereof.

The acrylic pressure-sensitive adhesive layer in the present invention is a pressure-sensitive adhesive layer formed from an acrylic pressure-sensitive adhesive composition. The acrylic pressure-sensitive adhesive composition may vary depending on the method for forming the pressure-sensitive adhesive layer and is not particularly limited, but examples thereof include, for example, an acrylic pressure-sensitive adhesive composition containing an acrylic polymer (X) as the essential component thereof, and an acrylic pressure-sensitive adhesive composition containing, as the essential component thereof, a mixture of monomer components forming an acrylic polymer (X) (this may be referred to as a "monomer mixture") or a partially polymerized product thereof. Although not particularly limited, and the former includes, for example, a solvent-type pressure-sensitive adhesive composition; and the latter includes, for example, an active energy-ray-curable pressure-sensitive adhesive composition. The acrylic pressure-sensitive adhesive composition preferably contains a silane coupling agent, in addition to the essential ingredient (acrylic polymer (X), or monomer mixture or its partially polymerized product), and if desired, may contain any other additive.

The "acrylic pressure-sensitive adhesive composition" is meant to include a "composition for forming an acrylic pressure-sensitive adhesive layer". The "monomer mixture" means a mixture consisting of monomer components forming an acrylic polymer (X). The "partially polymerized product" means a composition where one or more of the constituent components of the monomer mixture have been partially polymerized.

The acrylic polymer (X) is an acrylic polymer formed from (composed of) a monomer component including, as the essential monomer component, an alkyl (meth)acrylate having a linear or branched alkyl group having 1 to 14 carbon atoms. The acrylic polymer (X) may be used either alone or in combination of two or more kinds thereof. In this description, the "alkyl (meth)acrylate having a linear or branched alkyl group having 1 to 14 carbon atoms" may be referred to as a "$C_{1-14}$ alkyl (meth)acrylate". "(Meth)acryl" means "acryl" and/or "methacryl" (one or both of "acryl" and "methacryl"), and the same shall apply hereinunder.

As the monomer component forming the acrylic polymer (X), any of a polar group-containing monomer, an alicyclic monomer and a polyfunctional monomer as an optional monomer component (copolymerizable monomer component) may be used, in addition to the $C_{1-14}$ alkyl (meth)acrylate. In addition, any other monomers may be used. Above all, the acrylic polymer (X) is preferably an acrylic polymer formed from a monomer component including a $C_{1-14}$ alkyl (meth)acrylate and a polar group-containing monomer, as the essential monomer components thereof, more preferably an acrylic polymer formed from a monomer component including a $C_{1-14}$ alkyl (meth)acrylate, a polar group-containing monomer and an alicyclic monomer, as the essential monomer components thereof, and even more preferably an acrylic polymer formed from a monomer component including a $C_{1-14}$ alkyl (meth)acrylate, a polar group-containing monomer, an alicyclic monomer and a polyfunctional monomer, as the essential monomer components thereof.

The $C_{1-14}$ alkyl ester (meth)acrylate is not particularly limited, and examples thereof include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate), pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth)acrylate. Among them, alkyl (meth)acrylate having a linear or branched alkyl group having 4 to 12 carbon atoms ($C_{4-12}$ alkyl (meth)acrylate) is preferable, alkyl (meth)acrylate having a linear or branched alkyl group having 4 to 10 carbon atoms ($C_{4-10}$ alkyl (meth)acrylate) is more preferable, alkyl acrylate having a linear or branched alkyl group having 4 to 10 carbon atoms ($C_{4-10}$ alkyl acrylate) is further more preferable, and 2-ethylhexyl acrylate (2EHA) and n-butyl acrylate (BA) is further more preferable. The $C_{1-14}$ alkyl (meth)acrylate may be used either alone or in combination of two or more thereof.

The content of the $C_{1-14}$ alkyl (meth)acrylate in all the monomer components forming the acrylic polymer (X) is from 50 to 100 wt% (50 wt% or more and 100 wt% or less) based on the total amount of the monomer component (100 wt%) forming the acrylic polymer (X), preferably from 55 to 99.9 wt%, more preferably from 60 to 99.5 wt%, even more preferably from 65 to 99 wt%, still more preferably from 65 to 98.5 wt%, and most preferably from 70 to 95 wt%, from the viewpoint of the adhesiveness of the acrylic pressure-sensitive adhesive layer in the present invention.

The polar group-containing monomer is a monomer including a polar group in its molecular (especially, an ethylenically unsaturated monomer), and examples thereof include a carboxyl group-containing monomer such as (meth)acrylic acid, itaconic acid, maleic acid, fumaric acid, crotonic acid and isocrotonic acid, and its anhydride (for example, acid anhydride group-containing monomer such as maleic anhydride and itaconic anhydride, and the like); a hydroxyl group-containing monomer such as hydroxyl alkyl (meth)acrylate including 2-hydroxyethyl (meth)acrylate, 3-hydroxypropyl (meth)acrylate, 4-hydroxybutyl (meth)acrylate and 6-hydroxyhexyl (meth)acrylate, vinyl alcohol and allyl alcohol; an amide group-containing monomer such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide; an amino group-containing monomer such as aminoethyl (meth)acrylate, dimethylaminoethyl (meth)acrylate and t-butylaminoethyl (meth)acrylate; an epoxy group-containing monomer such as glycidyl (meth)acrylate and methyl glycidyl (meth)acrylate; a cyano group-containing monomer such as acrylonitrile and methacrylonitrile; a hetero ring-containing vinyl monomer such as N-vinyl-2-pyrrolidone, (meth)acryloylmorpholine, N-vinylpyridine, N-vinylpiperidone, N-vinylpyrimidine, N-vinylpiperazine, N-vinylpyrrole, N-vinylimidazole and N-vinyloxazole; a sulfonate group-containing monomer such as sodium vinylsulfonate; a phosphate group-containing monomer such as 2-hydroxyethylacryloyl phosphate; an imide group-containing monomer such as cyclohexylmaleimide and isopropylmaleimide; and an isocyanate group-containing monomer such as 2-methacryloyloxyethyl isocyanate. The polar group-containing monomer may be used alone or in combination of two or more thereof.

Preferably, the polar group-containing monomer is at least one monomer selected from the group consisting of a carboxyl group-containing monomer, a hydroxyl group-containing monomer and a nitrogen atom-containing monomer. The carboxyl group-containing monomer shall include an acid anhydride of a carboxyl group-containing monomer. The nitrogen atom-containing monomer is a monomer which contains at least one nitrogen atom in the molecule thereof. As the nitron containing monomer, examples thereof include the amide group-containing monomer and a nitrogen atome-containing monomer among the hetero ring-containing vinylic monomer; and of those, N-vinyl-2-pyrrolidone (NVP) is preferable. As the polar group-containing monomer, the carboxyl group-containing monomer and the hydroxyl group-containing monomer are preferable, and acrylic acid (AA) and 2-hydroxyethyl acrylate (HEA) are further more preferable. Each of the carboxyl group-containing monomer, the hydroxyl group-containing monomer and the nitrogen atom-containing monomer may be used either alone or in combination of two or more kinds thereof.

The content of the polar group-containing monomer in all the monomer components forming the acrylic polymer (X) is from 0 to 15.0 wt%, preferably from 0 to 11.0 wt%, and more preferably from 0 to 5.0 wt% based on the total amount of the monomer component (100 wt%) forming the acrylic polymer (X), from the viewpoint of the reworkability with the pressure-sensitive adhesive sheet of the present invention. The content is even more preferably 0 wt% or more and less than 2.0 wt%; still more preferably from 0 to 1.8 wt% (0 wt% or more and 1.8 wt% or less), further more preferably more than 0 wt% and less than 1.0 wt%, still further more preferably from 0.1 to 0.8 wt%, and still further more preferably from 0.3 to 0.8 wt%. When the content is less than 2.0 wt%, the pressure-sensitive adhesive force can be prevented from being too high thereby securing good reworkability with the pressure-sensitive adhesive sheet. As the monomer component forming the acrylic polymer (X), the polar group-containing monomer may be not used; however, using the polar group-containing monomer in some degree is favorable since the pressure-sensitive adhesive force to optical members is improved. More preferably, the total amount of the content of the carboxyl group-containing monomer, the content of the hydroxyl group-containing monomer and the content of the nitrogen atom-containing monomer (the total content of those monomers) in all the monomer components forming the acrylic polymer (X) satisfies the above-mentioned range.

From the viewpoint of the humidification whitening resistance of the pressure-sensitive adhesive sheet of the present invention, the content of the polar group-containing monomer is preferably 1 wt% or more, more preferably 3 wt% or more, and even more preferably 5 wt% or more.

The alicyclic monomer is a monomer of an alicyclic compound, that is, a monomer having a non-aromatic ring in the molecule thereof. As the nonaromatic ring, examples thereof include a non-aromatic alicyclic ring (e.g., cycloalkane ring such as cyclopentane ring, cyclohexane ring, cycloheptane ring and cyclooctane ring; cycloalkene ring such as cyclohexene ring), a non-aromatic crosslinked ring (e.g., crosslinked hydrocarbon ring, for example, bicyclic hydrocarbon ring such as pinane, pinene, bornane, norbomane and norbornene; tricyclic hydrocarbon ring such as adamantane; tetracyclic hydrocarbon ring), etc.

The alicyclic monomer is not particularly limited, and examples thereof include, for example, a cycloalkyl (meth) acrylate such as cyclopentyl (meth)acrylate, cyclohexyl (meth)acrylate, cycloheptyl (meth)acrylate and cyclooctyl (meth) acrylate; a (meth)acrylate having a bicyclic hydrocarbon ring such as isobornyl (meth)acrylate; a (meth)acrylate having a tricyclic or more multicyclic hydrocarbon ring such as dicyclopentanyl (meth)acrylate, dicyclopentanyloxyethyl (meth) acrylate, tricyclopentanyl (meth)acrylate, 1-adamantyl (meth)acrylate, 2-methyl-2-adamantyl (meth)acrylate and 2-etltyl-2-adamantyl (meth)acrylate. These alicyclic monomers may be used either alone or in combination of two or more kinds thereof.

As the alicyclic monomer, cyclohexyl acrylate (CHA) (Tg of homopolymer thereof: 15°C), cyclohexyl methacrylate (CHMA) (Tg of homopolymer thereof: 66°C), isobornyl acrylate (IBXA) (Tg of homopolymer thereof: 97°C) and isobornyl methacrylate (IBXMA) (Tg of homopolymer thereof: 173°C) are preferable.

The glass transition temperature (Tg) of the alicyclic monomer in the case of forming a homopolymer thereof is not particularly limited, and is preferably from 60 to 190°C, more preferably from 60 to 150°C, and even more preferably from 60 to 120°C, from the viewpoint of elevating the glass transition temperature of the acrylic polymer (X) to thereby enhance the processability of the double-sided pressure-sensitive adhesive sheet of the present invention, The "glass transition temperature (Tg) in the case of forming homopolymer" may be referred to as "Tg of homopolymer".

Regarding Tg of homopolymers of monomers other than the cyclohexyl acrylate (CHA), cyclohexyl methacrylate (CHMA), isobornyl acrylate (IBXA) and isobornyl methacrylate (IBXMA), the numerical values described in "Polymer Handbook" (3rd edition, by John Wiley & Sons, Inc., 1989) are employable. Regarding Tg of homopolymers of monomers other than those cyclohexyl acrylate, cyclohexyl methacrylate, isobornyl acrylate and isobornyl methacrylate, which are not referred to in the above-mentioned literature, the numerical values to be obtained according to the measuring method mentioned below are employable (see JP 2011-099078 A).

(Measuring method)

100 parts by weight of a monomer, 0.2 part by weight of 2,2'-azobisisobutyronitrile, and 200 parts by weight of ethyl acetate as a polymerization solvent, are put into a reactor provided with a thermometer, an agitator, a nitrogen introducing tube and a reflux cooling tube, followed by stirring for 1 hour while nitrogen gas is introduced thereto. After oxygen in the polymerization system is removed thereby, the system is heated to 63°C, followed by reacting for 10 hours. Subsequently, the system is cooled to room temperature, thereby obtaining a homopolymer solution having a solid matter concentration of 33 wt%. Thereafter, the homopolymer solution is cast-coated on a release liner, followed by drying to prepare a test sample (sheet-shaped homopolymer) having a thickness of about 2 mm. The test sample is pierced in a disk shape having a diameter of 7.9 mm, and the pieced test samples is inserted to a parallel plate and then viscoelasticity thereof is measured by a shear mode at a temperature-rising rate of 5°C/min in the temperature range of -70°C to 150°C while applying shear distortion of a frequency of 1 Hz by using a viscoelasticity tester (ARES, manufactured by Reomatrix Corporation) and a peaktop temperature of $\tan\delta$ is set as Tg of the homopolymer.

The content of the alicyclic monomer in all the monomer components forming the acrylic polymer (X) is preferably 0,5 wt% or more and less than 10 wt%, more preferably from 1 to 8 wt%, based on the total amount (100 wt%) of the monomer component forming the acrylic polymer (X), from the viewpoint of the processability of the double-sided pressure-sensitive adhesive sheet of the present invention. Using the alicyclic monomer is preferred as capable of elevating the glass transition temperature of the acrylic polymer (X) to thereby increase the strength of the acrylic pressure-sensitive adhesive layer in the present invention and to thereby enhance the processability of the double-sided pressure-sensitive adhesive sheet of the present invention. The content of 0.5 wt% or more is preferred, since the effect of enhancing the processability of the pressure-sensitive adhesive sheet is easily achieved. The content of less than 10 wt% is also preferred as capable of preventing the acrylic pressure-sensitive adhesive layer in the present invention from being too hard, thereby enhancing the reworkability.

As the polyfunctional monomer, examples thereof include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (methacrylate, vinyl (meth)acrylate, divinylbenzene, epoxyacrylate, polyester acrylate and urethane acrylate. Among them, from the viewpoint of the step absorbability, hexanediol diacrylate (HDDA) is preferable. The polyfunctional monomer may be used alone or in combination of two or more thereof.

The content of the polyfunctional monomer in all the monomer components forming the acrylic polymer (X) is not particularly limited, but is preferably from 0.001 to 0.3 wt%, more preferably from 0.005 to 0.2 wt%, even more preferably from 0.01 to 0,1 wt%, based on the total amount (100 wt%) of the monomer component forming the acrylic polymer (X), from the viewpoint of controlling the gel fraction of the acrylic pressure-sensitive adhesive layer in the present invention to fall within the preferred range. The content of 0.3 wt% or less is preferred as capable of preventing the gel fraction of the acrylic pressure-sensitive adhesive layer in the present invention from being too high thereby readily enhancing the reworkability. The content of 0.001 wt% or more is preferred as capable of preventing the gel fraction of the acrylic pressure-sensitive adhesive layer in the present invention from being too low, thereby readily enhancing the anti-foaming release property and the processability. In the case where a crosslinking agent is used, the polyfunctional monomer may not be used; however, when a crosslinking agent is not used, it is desirable to use the polyfunctional monomer in an amount of such that the content thereof could fall within the above-mentioned range.

As the monomer component forming the acrylic polymer (X), any monomer other than the $C_{1-14}$ alkyl (meth)acrylate, polar group-containing monomer, alicyclic monomer and polyfunctional monomer (other monomer) may be used. As the other monomer, examples thereof include (meth)acrylic acid ester other than the $C_{1-14}$ alkyl (meth)acrylate, polar group-containing monomer, alicyclic monomer and polyfunctional monomer, such as alkyl (meth)acrylates having a linear or branched alkyl group having 15 to 20 carbon atoms ($C_{15-20}$ alkyl (meth)acrylate) such as pentadecyl (meth)acrylate, hexadecyl (meth)acrylate, heptadecyl (meth)acrylate, octadecyl (meth)acrylate, nonadecyl (meth)acrylate and eicosyl (meth)acrylate; (meth)acrylates having an aromatic hydrocarbon group such as phenyl (meth)acrylate, phenoxyethyl (meth)acrylate and benzyl (meth)acrylate; alkoxylalkyl (meth)acrylates such as methoxyethyl (meth)acrylate and ethoxyethyl (meth)acrylate. In addition, examples thereof further include vinyl esters such as vinyl acetate and vinyl propionate; aromatic vinyl compounds such as styrene and vinyltoluene; olefins or dienes such as ethylene, butadiene, isoprene and isobutylene; vinyl ethers such as vinyl alkyl ether; vinyl chloride, etc. These other monomers may be used either alone or in combination of two or more kinds thereof.

The acrylic polymer (X) can be prepared through polymerization of the monomer components by any known/general polymerization method. The polymerization method of the acrylic polymer (X) includes, for example, a solution polymerization method, an emulsion polymerization method, a bulk polymerization method, a polymerization method by active energy-ray irradiation (active energy-ray polymerization method) and the like. From the viewpoint of the transparency, water resistance and the cost, a solution polymerization method and an active energy-ray polymerization method are preferred. Further, from the viewpoint of easiness in forming an acrylic pressure-sensitive adhesive layer with a relatively thick, an active energy-ray polymerization method is more preferred. That is, the acrylic polymer (X) is preferably an acrylic polymer formed by active energy-ray polymerization.

As the active energy-ray irradiated in the active energy-ray polymerization (photopolymerization), examples thereof include an alpha ray, a beta ray, a gamma ray, a neutron ray, and an ionizing radiation such as an electron ray or UV, and UV is preferable. An irradiation energy, an irradiation time and an irradiation method of the active energy-ray are not particularly limited so long as the monomer components may be reacted by activating a photopolymerization initiator.

In the solution polymerization, various kinds of general solvents can be used. Examples of such a solvent include organic solvents such as: esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methylethylketone and methylisobutylketone. The solvents may be used either alone or in combination of two or more thereof.

When the acrylic polymer (X) is prepared, a polymerization initiator such as a photopolymerization initiator (photoinitiator) and a thermal polymerization initiator may be used depending on the kind of polymerization reaction. The polymerization initiator may be used alone or in combination of two or more thereof.

The photopolymerization initiator is not particularly limited, and examples thereof include, for example, a benzoin ether photopolymerization initiator, an acetophenon photopolymerization initiator, an $\alpha$-ketal photopolymerization initiator, an aromatic sulfonyl chloride photopolymerization initiator, a photoactive oxime photopolymerization initiator, a benzoin photopolymerization initiator, a benzyl photopolymerization initiator, a benzophenon photopolymerization initiator, a ketal photopolymerization initiator and a thioxantone photopolymerization initiator. The content of the photopolymerization initiator used is not particularly limited, but is preferably 0.01 to 1 parts by weight, and more preferably 0.05 to 0.5 parts by weight based on 100 parts by weight of the total amount of the monomer components forming the acrylic polymer (X).

As the benzoin ether photopolymerization initiator, examples thereof include benzoin methyl ether, benzoin ethyl ether, benzoin propyl ether, benzoin isopropyl ether, benzoin isobutyl ether, 2,2-dimethoxy-1,2-diphenylethane-1-on and anisole methyl ether. As the acetophenon photopolymerization initiator, examples thereof include 2,2-diethoxyacetophenon, 2,2-dimethoxy-2-phenylacetophenon, 1-hydroxycyclohexylphenylketone, 4-phenoxydichloroacetophenon and 4-(t-butyl)dichloroacetophenon. As the $\alpha$-ketol photopolymerization initiator, examples thereof include 2-methyl-2-hydroxypropiophenon and 1-[4-(2-hydroxyethyl)phenyl]-2-methylpropane-1-on. As the aromatic sulfonyl chloride photopolymerization initiator, examples thereof include 2-naphthalenesulfanyl chloride. As the photoactive oxime photopolymerization initiator, examples thereof include 1-phenyl-1,-propanedion-2-(o-ethoxycarbonyl)-oxime. As the benzoine photopolymerization initiator, examples thereof include benzoin. As the benzyl photopolymerization initiator, examples thereof include benzyl. As the benzophenon photopolymerization initiator, examples thereof include benzophenon, benzoylbenzoate, 3,3'-dimethyl-4-methoxybenzophenon, polyvinylbenzophenon and $\alpha$-hydroxycyclohexyl phenyl ketone. As the ketal photopolymerization initiator, examples thereof include benzyl dimethyl ketal. As the thioxantone photopolymerization initiator, examples thereof include thioxantone, 2-chlorothioxantone, 2-methylthioxantone, 2, 4-dimethylthioxantone, isopropylthioxantone, 2, 4-diisopropylthioxantone and dodecylthioxantone.

As the polymerization initiator which is used when the acrylic polymer (X) is prepared by the solution polymerization, examples thereof include an azo polymerization initiator, a peroxide polymerization initiator (for example, dibenzoyl peroxide and tert-butyl permaleate) and a redox polymerization initiator. Among the initiators, the azo polymerization initiator disclosed in JP 2002-69411 A is particularly preferable. As the azo polymerization initiator, examples thereof include 2,2'-azobisisobutyronitrile (hereinafter, referred to as AIBN in some cases), 2,2'-azobis-2-methylbutyronitrile (hereinafter, referred to as AMBN in some cases), dimethyl 2,2'-azobis(2-methylpropionate) and 4,4'-azobis-4-cyanovaleric acid. The content of the azo polymerization initiator used is preferably 0.05 to 0.5 parts by weight, and more preferably 0.1 to 0.3 parts by weight based on 100 parts by weight of the total amount of the monomer component forming the acrylic polymer (X).

The content of the acrylic polymer (X) in the acrylic pressure-sensitive adhesive layer in the present invention is preferably 50 wt% or more (from 50 to 100 wt%), more preferably from 65 to 100 wt%, and even more preferably from 70 to 99.9 wt%, based on 100 wt% of the acrylic pressure-sensitive adhesive layer in the present invention, from the viewpoint of the pressure-sensitive adhesive property or the like.

The acrylic pressure-sensitive adhesive layer of the present invention preferably includes a silane coupling agent for the purpose of improving a pressure-sensitive adhesive force (in particular, pressure-sensitive adhesive force to glass). The silane coupling agent is not particularly limited, and examples thereof include $\gamma$-glycidoxypropyltrimethoxysilane, $\gamma$-glycidoxypropyltriethoxysilane, $\gamma$-aminopropyltrimethoxysilane and N-phenyl-aminopropyltrimethoxysilane. Among them, $\gamma$-glycidoxypropyltrimethoxysilane is preferable. As the silane coupling agent, for example, a commercially available product such as trade name "KBM-403" (manufactured by Shin-Etsu Chemical Co., Ltd.) may be used. The silane coupling agent may be used either alone or in combination of two or more thereof.

The content of the silane coupling agent in the acrylic pressure-sensitive adhesive layer in the present invention is not particularly limited, but is preferably from 0.01 to 2 parts by weight, more preferably from 0.03 to 1 part by weight, and even more preferably from 0.03 to 0.5 parts by weight, based on 100 parts by weight of the total amount of the monomer component forming the acrylic polymer (X). By incorporating the silane coupling agent, the pressure-sensitive adhesive force (especially the pressure-sensitive adhesive force to glass) increases with time. Consequently, for example, immediately after (that is, immediately after production of products) optical members have been laminated through the double-sided pressure-sensitive adhesive sheet of the present invention, the pressure-sensitive adhesive force is relatively small and the laminated members can be readily reworked; and after the laminated products have been finished, the pressure-sensitive adhesive force is increased after a lapse of long period of time, and the adhesion reliability (property of having sufficient pressure-sensitive adhesive force and anti-foaming release property) is thereby enhanced. Accordingly, the embodiment is preferred as satisfying both reworkability and adhesion reliability. The content of 0.01 parts by weight or more is preferred since the effect of the adhesion reliability is easily achieved. The content of 2 parts by weight or less is preferred as enhancing the reworkability. Though not particularly limited, in the case where the silane coupling agent is not used, a polar group-having monomer is used as the monomer component forming the acrylic polymer (X), as capable of further increasing the pressure-sensitive adhesive force.

In the pressure-sensitive adhesive composition, if necessary, known additives such as a crosslinking agent, a crosslinking accelerator, a tackifying resin (rosin derivative, polyterpene resin, petroleum resin, and oil-soluble phenol), an antiaging agent, a filler, a colorant (dye or pigment), a UV absorbing agent, an antioxidant, a chain-transfer agent, a plasticizer, a softener, a surfactant and an antistatic agent may be included as long as the property of the present invention is not impaired.

As the crosslinking agent, examples thereof include an isocyanate-based crosslinking agent, an epoxy-based crosslinking agent, a melamine-based crosslinking agent, a peroxide-based crosslinking agent, an urea-based crosslinking agent, a metal alkoxide-based crosslinking agent, a metal chelate-based crosslinking agent, a metal salt-based crosslinking agent, a carbodiimide-based crosslinking agent, an oxazoline-based crosslinking agent, an aziridine-based crosslinking agent, an amine-based crosslinking agent and the like. Among them, the isocyanate-based crosslinking agent and the epoxy-based crosslinking agent are preferable. The crosslinking agent may be used either alone or in combination of two or more thereof.

As the isocyanate-based crosslinking agent polyfunctional isocyanate compound), examples thereof include lower aliphatic polyisocyanates such as 1,2-ethylene diisocyanate, 1,4-butylenediisocyanate and 1,6-hexamethylene diisocyanate; alicyclic polyisocyanates such as cyclopentylene diisocyanate, cyclohexylene diisocyanate, isophorone diisocyanate, hydrogenated tolylene diisocyanate and hydrogenated xylene diisocyanate; and aromatic polyisocyanates such as 2,4-tolylene diisocyanate, 2,6-tolylene diisocyanate, 4,4'-diphenylmethane diisocyanate and xylylene diisocyanate. Other than the above, a trimethylolpropane/tolylene diisocyanate adduct (manufactured by Nippon Polyurethane Industry Co., Ltd., trade name "CORONATE L"), and a trimethylolpropane/hexamethylene diisocyanate adduct (manufacture by Nippon Polyurethane Industry Co., Ltd., trade name "CORONATE HL") may also be used.

As the epoxy-based crosslinking agent (polyfunctional epoxy compound), examples thereof include N,N,N',N'-tetraglycidyl-m-xylenediamine, diglycidyl aniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic diglycidyl ester, triglycidyl-tris(2-hydroxyethyl)isocyanurate, resorcin diglycidyl ether, bisphenolS-diglycidyl ether and an epoxy-based resin having two or more epoxy groups in the molecule. As commercially available products, trade name "TETRAD C" manufactured by Mitsubishi Gas Chemical Company, Inc. may be used.

In the case where the crosslinking agent is used, the content of the crosslinking agent in the acrylic pressure-sensitive adhesive layer in the present invention is not particularly limited, but is for example, from 0.01 to 1 part by weight, more preferably from 0.01 to 0.8 parts by weight based on the total amount (100 parts by weight) of the monomer components forming the acrylic polymer (X), from the viewpoint of controlling the gel fraction of the acrylic pressure-sensitive adhesive layer in the present invention to fall within the preferred range thereof.

The gel fraction of the acrylic pressure-sensitive adhesive layer in the present invention is from 20 to 74 wt%, preferably from 40 to 74 wt%, more preferably from 50 to 74 wt%, and even more preferably from 50 to 73.5 wt%. When the gel fraction is 74 wt% or less, then the cohesive force of the acrylic pressure-sensitive adhesive layer in the present invention could lower in some degree so that the acrylic pressure-sensitive adhesive layer can be flexible and the cohesive failure of the acrylic pressure-sensitive adhesive layer can be readily occurred owing to the shear stress thereof when separating adherends. Consequently, the adherends can be readily separated and the reworkability is thereby improved. Further, the acrylic pressure-sensitive adhesive layer in the present invention can readily follow a step, and the step absorbability thereof is therefore improved. On the other hand, when the gel fraction is 20 wt% or more, then the acrylic pressure-sensitive adhesive layer in the present invention can be prevented from being too flexible, thereby enhancing the processability and the anti-foaming release property. When the gel fraction is less than 20 wt%, then the acrylic pressure-sensitive adhesive layer is too flexible so that the processability of the double-sided pressure-sensitive adhesive sheet is worsened. In such a case, for example, when the double-sided pressure-sensitive adhesive sheet is cut, the pressure-sensitive adhesive may attach to the cutting blade, or when the pressure-sensitive adhesive sheet is laminated to an adherend, the pressure-sensitive adhesive layer thereof may be deformed and may step out from the edge of the adherend, that is, a trouble of "adhesive protrusion" may be occurred. In addition, in high-temperature environments or in high-temperature and high-humidity environments, a trouble of lifting of the pressure-sensitive adhesive sheet may be easily occurred, and the anti-foaming release property of the pressure-sensitive adhesive sheet is thereby worsened. The gel fraction can be controlled by suitably selecting and controlling the kind and the content (amount to be used) of the polyfunctional monomer and/or the crosslinking agent.

The gel fraction (ratio of the solvent-insoluble content) is determined in terms of the ethyl acetate-insoluble content. Concretely, the acrylic pressure-sensitive adhesive layer in the present invention is immersed in ethyl acetate at room temperature (23°C) for 7 days, and then the weight fraction (unit: wt%) of the insoluble matter in the immersed sample (acrylic pressure-sensitive adhesive layer in the present invention) relative to the that in the sample before immersion is calculated, and this indicates the gel fraction. More concretely, the gel fraction is a value calculated by the following "Method of measuring gel fraction".

(Method of measuring gel fraction)

About 0.1 g of the acrylic pressure-sensitive adhesive layer of the present invention is sampled from the double-sided pressure-sensitive adhesive sheet, wrapped with a porous tetrafluoroethylene sheet (trade name "NTF1122", manufactured by Nitto Denko Corporation) having an average pore size of 0.2 $\mu$m, and it is tied up with a kite string and at this time, it is measured for the weight, and the weight measured is designated as the weight before immersion. The weight before immersion is the total weight of the acrylic pressure-sensitive adhesive layer of the present invention (acrylic pressure-sensitive adhesive sampled above), the tetrafluoroethylene sheet and the kite string. The total weight of the tetrafluoroethylene sheet and the kite string is also measured, and this weight is designated as the wrapper weight.

Subsequently, the acrylic pressure-sensitive adhesive layer of the present invention wrapped with a tetrafluoroethylene sheet and tied up with a kite string (hereinafter referred to as the "sample") is put in a 50 ml-volume vessel filled with ethyl acetate, followed by allowing to stand still at 23°C for 1 week (7 days). The sample (after ethyl acetate treatment) is then taken out of the vessel, and it is transferred to an aluminum-made cup, followed by drying in a dryer at 130°C for 2 hours to remove ethyl acetate, and it is measured for the weight, and this weight is designated as the weight after immersion.

The gel fraction is calculated according to the following formula:

$$\text{Gel fraction (wt\%)} = ((A\text{-}B)/(C\text{-}B)) \times 100$$

(wherein A is the weight after immersion, B is the wrapper weight, and C is the weight before immersion).

The thickness of the acrylic pressure-sensitive adhesive layer in the present invention is not particularly limited, but is preferably from 10 $\mu$m to 1 mm, more preferably from 100 to 500 $\mu$m, and even more preferably from 150 to 350 $\mu$m. When the thickness is 10 $\mu$m or more, then the cohesive failure of the acrylic pressure-sensitive adhesive layer in the present invention can be readily occurred owing to the shear stress thereof when separating adherends. Consequently, adherends can be readily separated and the reworkability is improved. In addition, the acrylic pressure-sensitive adhesive layer in the present invention can readily follow a step, and the step absorbability thereof is therefore improved.

As the method for forming the acrylic pressure-sensitive adhesive layer of the present invention, a known and general method for forming the pressure-sensitive adhesive layer may be used. The method for forming the acrylic pressure-sensitive adhesive layer of the present invention depends on polymerization method of the acrylic polymer (X) and it is not particularly limited, but for example, the following methods (1) to (3) may be used. (1) The acrylic pressure-sensitive adhesive layer of the present invention is formed by coating an acrylic pressure-sensitive adhesive composition including a mixture (monomer mixture) of a monomer component forming the acrylic polymer (X) or partially polymerized product thereof, photopolymerization initiator, and, if necessary, a silane coupling agent, and various additives, on a substrate or a release liner, and irradiating (i.e. curing by an active energy-ray) active energy-ray (in particular, UV is preferable) thereto. (2) The acrylic pressure-sensitive adhesive layer of the present invention is formed by coating an acrylic pressure-sensitive adhesive composition (solution) including an acrylic polymer (X), a solvent, if necessary, a silane coupling agent, a crosslinking agent, and various additives, on a substrate or a separator, and drying and/or curing the composition. (3) The acrylic pressure-sensitive adhesive layer formed in (1) is further dried.

In the method for forming the pressure-sensitive adhesive layer, coating may be performed by a known coating method and using, for example, a general coater such as a gravure roll coater, a reverse roll coater, a kiss roll coater, a dip roll coater, a bar coater, a knife coater, a spray coater, a comma coater and a direct coater.

The content of the photopolymerization initiator, the silane coupling agent and the crosslinking agent in the acrylic pressure-sensitive adhesive composition preferably falls within the range described hereinabove as the content of each component in the acrylic pressure-sensitive adhesive layer in the present invention (in terms of the content thereof based on 100 parts by weight of the total amount of the monomer component forming the acrylic polymer (X)).

As the solvent for use in the method of forming the acrylic pressure-sensitive adhesive layer in the present invention, any general solvent may be used. The solvent is not particularly limited, and examples thereof include those exemplified hereinabove as the solvent for use in solution polymerization of the acrylic polymer (X). The solvent may be used either alone or in combination of two or more thereof.

[Optical double-sided pressure-sensitive adhesive sheet]

The optical double-sided pressure-sensitive adhesive sheet of the present invention includes at least one acrylic pressure-sensitive adhesive layer of the present invention. The double-sided pressure-sensitive adhesive sheet of the present invention may include one layer of the acrylic pressure-sensitive adhesive layer of the present invention or two or more layers of the acrylic pressure-sensitive adhesive layer of the present invention. Other than the acrylic pressure-sensitive adhesive layer of the present invention, the double-sided pressure-sensitive adhesive sheet of the present invention may include a substrate, a pressure-sensitive adhesive layer other than the acrylic pressure-sensitive adhesive layer of the present invention (other pressure-sensitive adhesive layer), and other layers (e.g., interlayer, undercoat layer) and the like, as long as the advantage of the present invention is not impaired.

The layer configuration of the double-sided pressure-sensitive adhesive sheet of the present invention is not particularly limited, but examples thereof includes, for example, the acrylic pressure-sensitive adhesive layer of the present invention alone; the acrylic pressure-sensitive adhesive layer of the present invention/other pressure-sensitive adhesive layer; the acrylic pressure-sensitive adhesive layer of the present invention/substrate/the acrylic pressure-sensitive adhesive layer of the present invention; the acrylic pressure-sensitive adhesive layer of the present invention/ substrate/other pressure-sensitive adhesive layer, etc. Above all, a configuration of the acrylic pressure-sensitive adhesive layer of the present invention alone, and a configuration of the acrylic pressure-sensitive adhesive layer of the present invention/substrate/the acrylic pressure-sensitive adhesive layer of the present invention (laminate configuration) are preferable; and a configuration of the acrylic pressure-sensitive adhesive layer of the present invention alone (that is, a substrateless double-sided pressure-sensitive adhesive sheet consisting of the acrylic pressure-sensitive adhesive layer of the present invention) is more preferable.

In the case where the double-sided pressure-sensitive adhesive sheet of the present invention is a double-sided pressure-sensitive adhesive sheet with a substrate, it is desirable, though not particularly limited, that the double-sided pressure-sensitive adhesive sheet is a double-sided pressure-sensitive adhesive sheet including the acrylic pressure-sensitive adhesive layers of the present invention on both surfaces of the substrate, from the viewpoint of the reworkability.

The substrate is not particularly limited, and examples thereof include plastic films and various optical films such as anti-reflection (AR) film, polarizing plate and retardation film. Examples of a material of the plastic film include plastic materials, including polyester resins such as polyethylene terephthalate (PET); acrylic resins such as polymethyl methacrylate (PMMA); polycarbonate; triacetyl cellulose (TAC); polysulfone; polyarylate; polyimide; polyvinyl chloride; polyvinyl acetate; polyethylene; polypropylene; ethylene-propylene copolymer; and cyclic olefin polymer such as trade name "ARTON (cyclic olefin polymer; manufactured by JSR)", trade name "ZEONOR (cyclic olefin polymer; manufactured by Nippon Zeon Co., Ltd.)". The plastic materials may be used either alone or in combination of two or more thereof. The "substrate" is a part which is laminated to the adhered together with the pressure-sensitive adhesive layer when using (laminating) the double-sided pressure-sensitive adhesive sheet to adherends (e.g., optical members). The separator (release liner) to be peeled off when using (laminating) the double-sided pressure-sensitive adhesive sheet of the present invention is not included in the "substrate".

Among them, the substrate is preferably a transparent substrate. As the transparent substrate, the total light transmittance in a visible light wavelength region of the substrate (in accordance with JIS K7361-1) is preferably 85% or more, and more preferably 88% or more. The haze of the substrate (in accordance with JIS K7136) is preferably 1.5% or less, and more preferably 1.0% or less. The transparent substrate may be a PET film or a non-oriented film such as trade name "ARTON", and trade name "ZEONOR".

The thickness of the substrate is not particularly limited, but for example, is preferably 12 μm to 75 μm. The substrate may have a single layer shape or multilayer shape. On the surface of the substrate, for example, a known/ general surface treatment such as a physical treatment such as a corona discharge treatment and a plasma treatment, and a chemical treatment such as an undercoat treatment, may be properly performed.

The other pressure-sensitive adhesive layer (pressure-sensitive adhesive layer other than the acrylic pressure-sensitive adhesive layer in the present invention) is not particularly limited, and examples thereof include any known/general pressure-sensitive adhesive layers formed from any known pressure-sensitive adhesive, for example, an urethane-based pressure-sensitive adhesive, acrylic pressure-sensitive adhesive, rubber-based pressure-sensitive adhesive, silicone-based pressure-sensitive adhesive, polyester-based pressure-sensitive adhesive, polyamide-based pressure-sensitive adhesive, epoxy-based pressure-sensitive adhesive, vinyl alkyl ether-based pressure-sensitive adhesive, fluorine-based pressure-sensitive adhesive, etc. Those pressure-sensitive adhesives may be used either alone or in combination of two or more thereof.

The surface of the pressure-sensitive adhesive (pressure-sensitive adhesive surface) of the double-sided pressure-sensitive adhesive sheet of the present invention may be protected by a separator (release liner) until it is used. In the double-sided pressure-sensitive adhesive sheet of the present invention, each pressure-sensitive adhesive surface may be protected by two separators, respectively, or protected in such a way that the surface is wound in a roll form by using one separator of which both sides are release surfaces. The separator is used as a protective material of the pressure-sensitive adhesive layer, and peeled when the double-sided pressure-sensitive adhesive sheet of the present invention is laminated to an adherend. The separator functions as a support of the pressure-sensitive adhesive layer. The separator may not be provided.

Any known release paper may be used as the separator. The separator may be, but not particularly limited to, for example, a substrate having a release treated layer, a low adhesive substrate composed of a fluorine polymer, or a low adhesive substrate composed of a non-polar polymer. As the substrate having the release treated layer, examples thereof include a plastic film or paper whose surface is treated by a release agent such as silicon-based release agent, long-chaine alkyl-based release agent, fluorine-based release agent, and molybdenum sulfide-based release agent. As the fluorine-based polymer, examples thereof include polytetrafluoroethylene, polychlorotrifluoroethylene, polyvinyl fluoride, polyvinylidene fluoride, a tetrafluoroethylene-hexafluoropropylene copolymer and a chlorofluoroethylene-vinylidene fluoride copolymer. As the non-polar polymer, examples thereof include an olefine-based resin (for example, polyethylene, polypropylene and the like). The separator can be formed by using a known/general method. The thickness of the separator is not particularly limited.

The thickness (total thickness) of the double-sided pressure-sensitive adhesive sheet of the present invention is not particularly limited, but is preferably from 10 $\mu$m to 1 mm, more preferably from 100 to 500 $\mu$m, and even more preferably from 150 to 350 $\mu$m. When the thickness thereof is 10 $\mu$m or more, the acrylic pressure-sensitive adhesive layer of the present invention can be relatively thick, and therefore, the cohesive failure, thereof can be readily occurred owing to the shear stress thereof when separating adherends. Consequently, the reworkability is improved. In addition, the acrylic pressure-sensitive adhesive layer of the present invention can readily follow a step, and the step absorbability thereof is therefore improved. The thickness of the double-sided pressure-sensitive adhesive sheet of the present invention means a thickness from one pressure-sensitive adhesive surface to the other pressure-sensitive adhesive surface of the sheet in the double-sided pressure-sensitive adhesive sheet. The thickness of the double-sided pressure-sensitive adhesive sheet of the present invention does not include the thickness of the separator.

The double-sided pressure-sensitive adhesive sheet of the present invention preferably has high transparency. The haze of the double-sided pressure-sensitive adhesive sheet of the present invention (in accordance with JIS K7136) is, for example, preferably 3.0% or less and more preferably 1.5% or less. When the haze is 3.0% or less, transparency or appearance of the laminated optical member or optical product becomes better. The total light transmittance (total light transmittance in a visible light wavelength region) of the double-sided pressure-sensitive adhesive sheet of the present invention (in accordance with JIS K7361-1) is not particularly limited, but is preferably 87% or more, and more preferably 89% or more. When the total light transmittance is 87% or more, transparency or appearance of the laminated optical member or optical product becomes better. The haze and total light transmittance can be measured by laminating the double-sided pressure-sensitive adhesive sheet of the present invention to a slide glass (for example, total light transmittance of 92% and haze of 0.2%), and using a haze meter (manufactured by Murakami Color Research Laboratory Co., Ltd., trade name "HM-150"). The haze and total light transmittance of the acrylic pressure-sensitive adhesive layer of the present invention preferably satisfy the above range, respectively,

The double-sided pressure-sensitive adhesive sheet of the present invention has excellent reworkability. The double-sided pressure-sensitive adhesive sheet of the present invention is not particularly limited, but is favorably used as a removable double-sided pressure-sensitive adhesive sheet (removing-type double-sided pressure-sensitive adhesive sheet). Although not particularly limited, the reworkability, as referred to in the present invention can be evaluated, for example, according to a removing test as mentioned below. In the following removing test, preferably, the adherend A and the adherend B can be removed (in particular, the adherend A and the adherend B can be removed with no breakage of both of the adherend A and the adherend B). In addition, after the adherend A and the adherend B are separated, it is desirable that the pressure-sensitive adhesive remains on both of the adherend A and the adherend B. This means that, when a shear force is given to the laminate (laminated body) of adherends laminated through the double-sided pressure-sensitive adhesive sheet, the cohesive failure of the pressure-sensitive adhesive layer in the double-sided pressure-sensitive adhesive sheet can be occurred, whereby the adherends can be readily separated from each other with no breakage.

(Removing test)

One pressure-sensitive adhesive surface of the double-sided pressure-sensitive adhesive sheet (size: 100 mm length × 50 mm width) is laminated to the surface of a polarizing film of the following adherend A and the other pressure-sensitive adhesive surface thereof is laminated to the surface of the following adherend B, thereby preparing a test piece (size: 100 mm length × 50 mm width) having a configuration of slide glass/polarizing film/double-sided pressure-sensitive adhesive sheet/slide glass, and the test piece is left in the environment of 23°C and 50% RH for 1 hour and then tested as follows:

While the adherend A in the test piece is fixed, the adherend B is rotated in the plane perpendicular to the thickness direction of the double-sided pressure-sensitive adhesive sheet to thereby separate the adherend B from the adherend A. The rotation angle of the adherend B is preferably 10° or more, and more preferably from 15 to 45°. The "plane perpendicular to the thickness direction of the double-sided pressure-sensitive adhesive sheet" means a plane parallel to the surface having a length of 100 mm and a width of 50 mm of the double-sided pressure-sensitive adhesive sheet, the adherend A and the adherend B.

The adherend A is a laminate (size: 100 mm length × 50 mm width) of a slide glass (manufactured by Matsunami Glass Industry Ltd., thickness 0.7 mm, size: 100 mm length × 50 mm width) and a polarizing film (trade name "TEG 1465 DUHC" manufactured by Nitto Denko Corporation, 100 mm length × 50 mm width). The adherend B is a slide glass (manufactured by Matsunami Glass Industry Ltd., thickness 0.7 mm, size: 100 mm length × 50 mm width).

In the removing test, the adherend B is rotated as if twisted relative to the adherend A. That is, a shear stress (especially rotational shear stress) is given to the double-sided pressure-sensitive adhesive sheet with which the adherend A and the adherend B are laminated. More concretely, the removing test can be carried out according to "(2) Reworkability (Removing test)" to be mentioned below.

Heretofore, for example, in the field of double-sided pressure-sensitive adhesive sheets for laminating optical members such as a liquid-crystal display (LCD) and a conductive polyethylene terephthalate (PET) film, investigations have been made on the reworkability when re-laminated during the manufacture. In the case where one of the members to be laminated is a flexible member such as a PET film as described above, in general, the laminated members are separated by peeling the flexible member side. Accordingly, in general, the reworkability has been enhanced by reducing the pressure-sensitive adhesive force of one pressure-sensitive adhesive surface of the double-sided pressure-sensitive adhesive sheet; and for example, a method of densifying the crosslinked structure of the pressure-sensitive adhesive has been employed. However, in the case where high-rigidity hard members (e.g., LCD and glass sensor) are laminated with the double-sided pressure-sensitive adhesive sheet modified to have reworkability as described above, the laminated members could not be separated by peeling, and consequently the double-sided pressure-sensitive adhesive sheet could not realize sufficient reworkability.

As opposed to this, in the present invention, the double-sided pressure-sensitive adhesive sheet is so planned that the gel fraction of the essential pressure-sensitive adhesive layer (acrylic pressure-sensitive adhesive layer) of the double-sided pressures-sensitive adhesive sheet is relatively lowered and the cohesive force of the pressure-sensitive adhesive layer is therefore lowered, thereby facilitating in some degree the cohesive failure of the pressure-sensitive adhesive layer. Consequently, even in the case where high-rigidity members are laminated together therewith, the cohesive failure of the pressure-sensitive adhesive layer in the double-sided pressure-sensitive adhesive sheet can be occurred as assisted by a shear stress (especially rotational shear stress) given to the double-sided pressure-sensitive adhesive sheet, whereby the laminated members can be separated with no breakage and the reworkability is thereby enhanced. In addition, the pressure-sensitive adhesive layer is flexible, and therefore the step absorbability is thereby enhanced. Further, the content of the polar group-containing monomer for forming the acrylic polymer used in the acrylic pressure-sensitive adhesive layer is reduced to thereby facilitate in some degrees the interfacial separation between the adherends and the pressure-sensitive adhesive layer; and owing to the synergistic effect of the interfacial separation and the separation by the cohesive failure, the reworkability is further enhanced. On the other hand, the lower limit of the gel fraction is controlled and the sufficient anti-foaming release property is thereby realized.

In addition to the above, in the case where the acrylic polymer used in the acrylic pressure-sensitive adhesive layer of the present invention contains an alicyclic monomer as the constituent monomer component, the Tg is improved and, owing to the effect, the strength of the acrylic pressure-sensitive adhesive layer of the present invention is thereby increased and the processability is improved, and the embodiment is therefore preferred. In the case where the acrylic pressure-sensitive adhesive layer of the present invention contains a silane coupling agent, the pressure-sensitive adhesive force increases with time, and therefore, immediately after the lamination at which reworking is often needed, the pressure-sensitive adhesive force is relatively low to improve reworkability, and after completion of products, the pressure-sensitive adhesive sheet can exhibit high adhesion reliability; and for these reasons, the embodiment is preferred.

The double-sided pressure-sensitive adhesive sheet of the present invention is an optical double-sided pressure-sensitive adhesive sheet which is used for optical applications. More concretely, the optical double-sided pressure-sensitive adhesive sheet is, for example, used for laminating optical members, and for manufacture of products (optical products) including optical members. The double-sided pressure-sensitive adhesive sheet of the present invention is excellent in reworkability and, even in the case where it is used for laminating adherends together and the adherends are separated (removed), the separated adherends can be reused (that is, removable double-sided pressure-sensitive adhesive sheet, In addition, the double-sided pressure-sensitive adhesive sheet of the present invention is excellent in anti-foaming release property, and in the case where a laminate (optical products or the like) produced by laminating optical members through the double-sided pressure-sensitive adhesive sheet of the present invention is exposed to high-temperature environments or high-temperature and high-humidity environments, no appearance failure such as foaming or release is not occurred. Further, the pressure-sensitive adhesive sheet of the present invention is excellent in step absorbability, and in the case where optical members having a step such as a printing step are laminated with the pressure-sensitive adhesive sheet, no appearance failure such as lifting at the step part is not occurred. For these reasons, the double-sided pressure-sensitive adhesive sheet of the present invention exhibits especially excellent characteristics as an optical double-sided pressure-sensitive adhesive sheet.

The optical member refers to a member having an optical characteristic (for example, a polarized property, a photorefractive property, a light scattering property, a light reflective property, a light transmitting property, a light absorbing property, a light diffractive property, an optical rotation property and visibility). The optical member is not particularly limited so long as the optical member is a member having the optical characteristic, and a member constituting the optical product such as display device (image display device) and input device, or a member used in the device (optical product) are exemplified, and examples thereof include a polarizing plate, a wave plate, a retardation plate, an optical compensation film, a brightness enhancing film, a light guide plate, a reflective film, an anti-reflective film, a transparent conductive film (e.g. ITO film), a design film, a decoration film, a surface protective film, a prism, lens, a color filter, a transparent substrate, and a member in which these are laminated (collectively referred to as "a functional film" in some cases). Each of the "plate" and the "film" include a plate shape, a film shape, and a sheet shape, and for example, the "polarizing film" includes a "polarizing plate" and a "polarizing sheet". The "functional film" includes a "functional plate" and a "functional sheet".

As the display device (image display device), examples thereof include a liquid crystal display device, an organic electroluminescence (EL) display device, a plasma display panel (PDP), an electronic paper and the like. As the input device, examples thereof include a touch panel and the like.

The optical member is not particularly limited, but for example, may be a member composed of glass, acrylic resin, polycarbonate, polyethyleneterephthalate, a metal thin film, or the like (for example, a sheet shape, film shape or plate shape of member). As described above, the "optical member" of the present invention also includes a member (a design film, a decoration film, a surface protective film or the like) for decoration or protection while maintaining visibility of the display device or the input device as an adherend.

In particular, the double-sided pressure-sensitive adhesive sheet of the present invention is favorably used for high-rigidity optical members, more favorably for glass-made optical members. That is, the double-sided pressure-sensitive adhesive sheet of the present invention is preferred as a double-sided pressure-sensitive adhesive sheet for laminating glass-made optical members. The glass-made optical members include glass plates with transparent electrode for glass sensors, glass-made display panels and touch panels, etc.

The double-sided pressure-sensitive adhesive sheet of the present invention may be attached/laminated to at least one surface of various functional films, thereby preparing pressure-sensitive adhesive functional films having a pressure-sensitive adhesive layer on at least one surface of a functional film. The double-sided pressure-sensitive adhesive sheet of the present invention used in such pressure-sensitive adhesive functional films may be a substrateless double-sided pressure-sensitive adhesive sheet or a double-sided pressure-sensitive adhesive with a substrate.

Using the double-sided pressure-sensitive adhesive sheet of the present invention provides an optical member containing the double-sided pressure-sensitive adhesive sheet of the present invention, a touch panel containing the double-sided pressure-sensitive adhesive sheet of the present invention, an image display device containing the double-sided pressure-sensitive adhesive sheet of the present invention, etc.

By attaching/laminating the double-sided pressure-sensitive adhesive sheet of the present invention onto the surface (at least one surface) of an optical member, a pressure-sensitive adhesive optical member including a pressure-sensitive adhesive layer on at least one surface of the optical member can be obtained.

[Separating method]

In the double-sided pressure-sensitive adhesive sheet of the present invention, the cohesive failure of the acrylic pressure-sensitive adhesive layer of the present invention is readily occurred owing to the shear stress applied thereto. Consequently, in the case where the members (especially optical members) laminated through the double-sided pressure-sensitive adhesive sheet of the present invention are separated, the laminated members are preferably separated in such a manner that the double-sided pressure-sensitive adhesive sheet of the present invention could receive a shear stress. A method of separating two members laminated through the double-sided pressure-sensitive adhesive sheet of the present invention is described below. In the following, a separating method for two laminated optical members is typically described; however, in the separating method of the present invention, at least one of the two laminated members is an optical member, and for example, a method of separating an optical member and any member other than an optical member, which are laminated through the double-sided pressure-sensitive adhesive sheet of the present invention can be carried out in the same manner as described below. The method of separating two members laminated through the double-sided pressure-sensitive adhesive sheet of the present invention may be referred to as "separating method of the present invention".

The separating method of the present invention is a method for separating two optical members laminated through the double-sided pressure-sensitive adhesive sheet of the present invention, in which, preferably, the two optical members are moved relatively parallel to each other thereby producing a shear stress enough to break the double-sided pressure-sensitive adhesive sheet of the present invention. In the separating method of the present invention, the part to be broken in the double-sided pressure-sensitive adhesive sheet of the present invention is not particularly limited, but is mainly the acrylic pressure-sensitive adhesive layer of the present invention. The wording "two optical members are moved relatively parallel to each other" means that, while the spacing distance between the facing surfaces of the two optical members laminated through the double-sided pressure-sensitive adhesive sheet of the present invention is kept substantially constant, at least one of the two optical members is moved. For example, in the case where the two optical members are tabular members, at least one of the two optical members is moved while the two optical members (tabular members) are kept parallel to each other.

Further, in the separating method of the present invention, preferably, at least one of the two optical members is so moved that virtual linear lines parallel to each other and each specified in the adhesive surface of the double-sided pressure-sensitive adhesive sheet of the present invention to one optical member and the adhesive surface thereof to the other optical member could be in a twisted positional relationship. That is, at least one of the two optical members is preferably so moved that one pressure-sensitive adhesive surface of the double-sided pressure-sensitive adhesive sheet of the present invention and the other pressure-sensitive adhesive surface thereof could be twisted from each other. Then, a breaking shear stress can readily occur in the double-sided pressure-sensitive adhesive sheet of the present invention so that the double-sided pressure-sensitive adhesive sheet can be thereby broken into two parts in the thickness direction thereof and the two optical members can be thereby favorably separated from each other.

One preferred example of the separating method of the present invention includes fixing any one of the two optical members laminated through the double-sided pressure-sensitive adhesive sheet of the present invention, while anchoring a part of a hand board to the outer surface of the other optical member, and rotationally moving the other optical member in the plane perpendicular to the thickness direction of the double-sided pressure-sensitive adhesive sheet of the present invention, along with the hand board and around the anchoring part of the hand board serving as an axis, thereby breaking the double-sided pressure-sensitive adhesive sheet of the present invention. The hand board is not particularly limited, and examples thereof include, for example, a stainless plate and an aluminum plate.

Another preferred example of the separating method of the present invention includes movably holding the two optical members laminated through the double-sided pressure-sensitive adhesive sheet of the present invention, and rotationally moving at least one optical member in the plane perpendicular to the thickness direction of the double-sided pressure-sensitive adhesive sheet of the present invention thereby breaking the double-sided pressure-sensitive adhesive sheet of the present invention.

According to the separating method of the present invention, two optical members laminated through the double-sided pressure-sensitive adhesive sheet of the present invention can be separated from each other, without giving any substantial force (load) that may cause a large strain (deformation) enough to break or crack the optical members, even though at least one of these two optical members is a thin member poor in flexibility. The separating method of the present invention is favorably used, for example, for separating a display panel and a protective transparent plate, a display panel and a glass plate with a transparent electrode in a touch panel, and a glass plate with a transparent electrode in a touch panel and a protective transparent plate, which are arranged on the display surface side of a flat panel display.

The separating method corresponds to the case where the double-sided pressure-sensitive adhesive sheet of the present invention is used as the pressure-sensitive adhesive sheet, and the optical member is used as the plate in the separating method described in JP 2010-121134 A. The double-sided pressure-sensitive adhesive sheet of the present invention is especially favorably used in the separating method described in JP 2010-121134 A. The double-sided pressure-sensitive adhesive sheet of the present invention is preferably the double-sided pressure-sensitive adhesive sheet used in the separating method of the present invention.

Examples

The present invention is described in more detail with reference to the following Examples; however, the present invention is not limited by these Examples. The blending components of the prepolymer composition and the acrylic pressure-sensitive adhesive composition (the kind and the amount of the monomer components, the photopolymerization initiator and the silane coupling agent which were used in the composition) are shown in Table 1. The amount of each component (monomer, polyfunctional monomer, silane coupling agent, and photopolymerization initiator) is shown in terms of part by weight based on 100 parts by weight of the total amount of the monomer components (total amount of the monomer used in the prepolymer composition and the polyfunctional monomer).

Example 1

A mixture prepared by mixing 99.4 parts by weight 2-ethylhexyl acrylate (2EHA) and 0.5 parts by weight of acrylic acid (AA) was further mixed with 0.05 parts by weight of trade name "IRGACURE 184" (manufactured by Ciba Specialty Chemicals) and 0.05 parts by weight of trade name "IRGACURE 651" (manufactured by Ciba Specialty Chemicals) both serving as a photopolymerization initiator, and the resulting mixture was irradiated with UV ray until the viscosity (BH viscosimeter, No. 5 rotor, 10 rpm, measuring temperature 30°C) thereof could reach about 20 Pa·s to prepare a prepolymer composition in which a part of the above-mentioned monomer components were polymerized. To the prepolymer composition prepared in the above were added 0.1 parts by weight of hexanediol diacrylate (polyfunctional monomers), 0.3 parts by weight of a silane coupling agent (trade name "KBM-403" manufactured by Shin-Etsu Chemical Industry Co., Ltd.) and, as additional photopolymerization initiators, 0.1 parts by weight of trade name "IRGACURE 184" (manufactured by Ciba Specialty Chemicals) and 0.1 parts by weight of trade name "IRGACURE 651" (manufactured by Ciba Specialty Chemicals), thereby preparing an acrylic pressure-sensitive adhesive composition.

The acrylic pressure-sensitive adhesive composition was applied on a polyethylene terephthalate (PET) separator (trade name "MRF75" manufactured by Mitsubishi Plastics Inc.) so that the final thickness (thickness of the acrylic pressure-sensitive adhesive layer) could be 175 $\mu$m, thereby forming a coating layer. Next, a PET separator (trade name "MRF38" manufactured by Mitsubishi Plastics Inc.) was provided on the coating layer, thereby covering the coating layer and protecting it from oxygen. Subsequently, by using a black light (manufactured by Toshiba Corporation), the laminate of MRF75/coating layer/MRF38 was irradiated with a UV ray at an illumination intensity of 5 mW/cm$^2$ for 300 seconds from the top side (MRF38 side). Further, this was dried with a drier at 130°C for 2 minutes to evaporate away the remaining monomers to form an acrylic pressure-sensitive adhesive layer, thereby producing a double-sided pressure-sensitive adhesive sheet (substrateless double-sided pressure-sensitive adhesive sheet consisting of the acrylic pressure-sensitive adhesive layer) having a thickness of 175 $\mu$m

Examples 2 to 5, Comparative Examples 1 to 3

A prepolymer composition was prepared in the same manner as in Example 1 except that the kind and/or the amount of the monomer were changed as in Table 1.
Next, using the thus-prepared prepolymer composition and in the same manner as in Example 1, an acrylic pressure-sensitive adhesive composition and a double-sided pressure-sensitive adhesive sheet (substrateless double-sided pressure-sensitive adhesive sheet consisting of an acrylic pressure-sensitive adhesive layer) having a thickness of 175 $\mu$m were produced.

(Evaluation)

Each of the double-sided pressure-sensitive adhesive sheet (acrylic pressure-sensitive adhesive layer) produced in Examples and Comparative Examples was evaluated for the 180° peeling pressure-sensitive adhesive force, the gel fraction of the acrylic pressure-sensitive adhesive layer, the reworkability, the anti-foaming release property, the step absorbability and the transparency (total light transmittance and haze). The evaluation methods are shown below. The gel fraction of the acrylic pressure-sensitive adhesive layer was determined and evaluated according to the above-mentioned "(Method of measuring gel fraction)".
The evaluation results are shown in Table 1.

(1) 180° Peeling pressure-sensitive adhesive force (to glass, to polarizing film)

A sheet piece having a size of 100 mm length × 20 mm width was cut out from the double-sided pressure-sensitive adhesive sheet and then the separator was peeled from the sheet piece, A PET film (trade name "LUMIRROR S-10" manufactured by Toray Industries Inc.) having a thickness of 25 $\mu$m was laminated (backed) onto one pressure-sensitive adhesive surface (a surface opposite to the measuring surface) to produce a strip sheet piece.

Then, the separator was peeled from the strip sheet piece and the other pressure-sensitive adhesive surface (measuring surface) was laminated to a test plate by moving a 2 kg rubber roller back and forth once thereon to produce a test sample. After the test sample was allowed to stand in the atmosphere of 23°C and 50% RH for 30 minutes, a 180° peel test was conducted in accordance with JIS Z 0237 using a tensile tester to measure the 180° peeling strength (180° peeling pressure-sensitive adhesive force) (N/20 mm) against the test plate. The measurement was conducted under the atmosphere of 23°C and 50% RH under the conditions of a peeling angle of 180° and a tensile speed of 300 mm/minute. The number of the tests was 3 (number n).

The result of the 180° peeling strength in the case of using a slide glass (manufactured by Matsunami Glass Industry Ltd.; thickness 0.7 mm) as the test plate is given to the column of "180° peeling pressure-sensitive adhesive force (to glass)",

Also, the result of the 180° peeling strength in the case of using a polarizing film (trade name "TEG 1465 DUHC" manufactured by Nitto Denko Corporation, hard coat surface) as the test plate is given to the column of 180° peeling pressure-sensitive adhesive force (to polarizing film)".

(2-1) Reworkability (Removing test)

(Preparation of test piece)

A slide glass (manufactured by Matsunami Glass Industry Ltd., thickness 0.7 mm, size: 100 mm length × 50 mm width) and a polarizing film (trade name "TEG 1465 DUHC" manufactured by Nitto Denko Corporation, 100 mm length × 50 mm width) were laminated to prepare a laminate (size: 100 mm length × 50 mm width) to be used as an adherend A. A slide glass (manufactured by Matsunami Glass Industry Ltd., thickness 0.7 mm, size: 100 mm length × 50 mm width) was used as an adherend B.

A strip sheet piece having a size of 100 mm length × 50 mm width was cut out from the double-sided pressure-sensitive adhesive sheet, one separator thereof was peeled, and one adhesive surface thereof was laminated to the surface of the adherend B by moving a hand roller (2 kg roller) back and forth once. Next, the other separator was peeled, and the other adhesive surface was laminated to the surface of the polarizing film of the adherend A under the condition mentioned below, thereby preparing a test piece having a configuration of slide glass/polarizing film/double-sided pressure-sensitive adhesive sheet/slide lass (size: 100 mm length × 50 mm width).

(Laminating Condition)

Surface pressure: 0.4 MPa
Vacuum degree: 30 Pa
Laminating time: 2 seconds

Next, the test piece was put into an autoclave, and the test piece was subjected to an autoclave treatment under the condition of a temperature of 50°C and a pressure of 0.5 MPa for 15 minutes.

Further, the test piece was statically left in the environment of 23°C and 50% RH for 1 hour, and then, the test piece was used in the following separating test.

(Removing test)

One surface of a double-sided pressure-sensitive adhesive sheet (trade name "No. 5000NS" manufactured by Nitto Denko Corporation, size: 100 mm length × 50 mm width) was laminated to the surface of the test piece on the adherend A side, and then the other surface of the double-sided pressure-sensitive adhesive tape was laminated to a fixed base made of PMMA (polymethyl methacrylate).

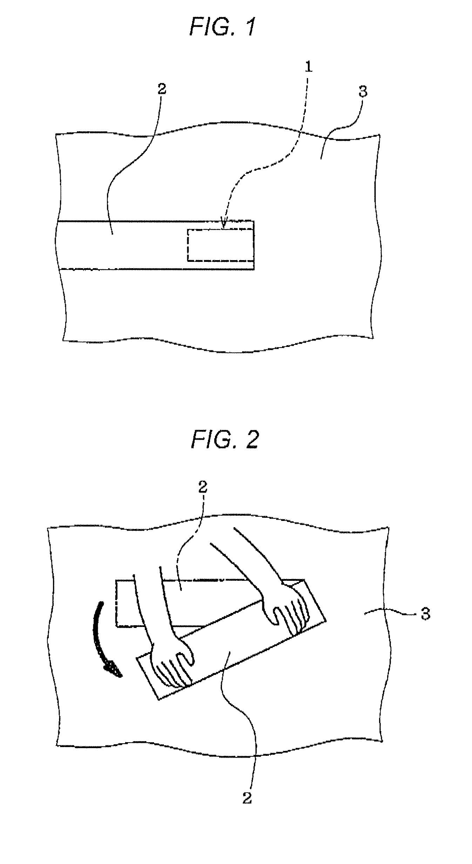

Next, one surface of a double-sided pressure-sensitive adhesive tape (trade name "No. 5000NS" manufactured by Nitto Denko Corporation, size: 100 mm length × 50 mm width) was laminated to the surface of the test piece on the adherend B side which had been fixed on the fixed base, and then, one end side, in the lengthwise direction, of a stainless plate having a length of 250 mm, a width of 70 mm and a thickness of 1.0 mm was laminated to the other surface of the double-sided pressure-sensitive adhesive tape, as shown in Fig. 1; and thereafter the stainless plate was so moved that its rotation angle could be 10° or more as shown in Fig. 2, thereby separating the adherend A and the adherend B from each other. The stainless plate was so moved that it could rotate in the plane perpendicular to the thickness direction of the test piece (that is, in the thickness direction of the double-sided pressure-sensitive adhesive tape, the adherend B and the stainless plate).

The surfaces of the thus-separated adherend A and adherend B were washed with isopropyl alcohol to remove the remaining pressure-sensitive adhesive, and, after thus washed, the surface was observed with a digital microscope (trade name, "VHF-100F" manufactured by Keyence Corporation). In the case where none of the adherend A and the adherend B were cracked, broken and hurt, the reworkability of the sample was evaluated as good (O); and in the case where at least one of the adherend A and the adherend B was cracked, broken or hurt, the reworkability of the sample was evaluated as not good ($\times$).

Fig. 1 is an explanatory view (plan view) schematically showing the fixed state of the test piece and the adhered state of the test piece and the stainless plate.

Fig. 2 is an explanatory view (plan view) schematically showing the state of moving the stainless plate. In Fig. 1 and Fig. 2, 1 is the test piece, 2 is the stainless plate, and 3 is the fixed base.

(2-2) Reworkability (Test with reworking apparatus)

(Preparation of test piece)

A glass plate A (manufactured by Matsunami Glass Industry Ltd., thickness 1.35 mm, size: 83 mm length $\times$ 55 mm width) and a glass plate B (manufactured by Matsunami Glass Industry Ltd., thickness 0.7 mm, size: 120 mm length $\times$ 60 mm width) were prepared. The double-sided pressure-sensitive adhesive sheet produced in Examples and Comparative Examples was cut into a size of 83 mm length $\times$ 55 mm width, and one adhesive surface thereof was laminated to the surface of the glass plate A using a hand roller. Next, the other pressure-sensitive adhesive surface was laminated to the surface of the glass plate B under the condition mentioned below, thereby preparing a test piece.

(Laminating Condition)

    Surface pressure: 0.25 MPa
    Vacuum degree: 100 Pa
    Laminating time: 5 seconds

Next, the test piece was put into an autoclave, and the test piece was subjected to an autoclave treatment under the condition of a temperature of 50°C and a pressure of 0.5 MPa for 15 minutes. Further, the test piece was statically left in the environment of 23°C and 50% RH for 1 hour, and then, the test piece was used in the following separating test.

(Separation of plates)

The glass plate A was fitted to a first jig and the glass plate B was fitted to a second jig, and the first jig was rotated so that the glass plates A and B were relatively rotated at a constant rotation speed of 1 degree/sec and a rotation angle of 10 degrees. The rotational axis of the relative rotation was the gravity center of the glass plates A and B. Subsequently, the first jig was linearly moved at a speed of 300 mm/sec (that is, the glass plate A was moved linearly and parallel to the glass plate B), thereby breaking the double-sided pressure-sensitive adhesive sheet existing between the glass plates A and B to separate the glass plates A and B from each other.

During the test, the test piece was kept at a temperature of 23°C.

The surfaces of the thus-separated adherend A and adherend B were washed to remove the pressure-sensitive adhesive, and, after thus washed, the surface was observed with a digital microscope (trade name, "VHF-100F" manufactured by Keyence Corporation). In Table 1, "O" means that both the glass plates A and B were not cracked, broken and hurt; and "$\times$" means that at least one of the glass plates A and B was cracked, broken or hurt.

(3-1) Anti-foaming release property (85°C)

In the same manner as in the above-mentioned "(2-1) Reworkability (Removing test)", a test piece (size: 100 mm length $\times$ 50 mm width) having a configuration of slide glass/polarizing film/double-sided pressure-sensitive adhesive sheet/slide glass was prepared. After statically kept in the environment of 23°C and 50% RH for 1 hour, the test piece was evaluated in the manner mentioned below.

Next, the test piece was put into an autoclave, and the test piece was subjected to an autoclave treatment under the condition of a temperature of 50°C and a pressure of 0.5 MPa for 15 minutes, Further, after the autoclave treatment, the test piece was taken out of the autoclave, then put into a drier set at a temperature of 85°C, and left therein for 24 hours. Subsequently, the test piece was taken out of the drier, and left at room temperature (23°C) for 30 minutes. Using a microscope, the test piece was checked for the presence of absence of foaming therein (including foaming caused by impurities). In the case where no foaming was observed in the sample, the anti-foaming release property of the sample was evaluated as good (O); and in the case where some foaming was observed therein, the anti-foaming release property of the sample was evaluated as not good (×). The evaluation results are given to the column of "Anti-foaming release property at 85°C" in Table 1.

(3-2) Anti-foaming release property (60°C/95% RH)

In the same manner as in the above-mentioned "(2-1) Reworkability (Removing test)", a test piece (size: 100 mm length × 50 mm width) having a configuration of slide glass/polarizing film/double-sided pressure-sensitive adhesive sheet/slide glass was prepared. After statically kept in the environment of 23°C and 50% RH for 1 hour, the test piece was evaluated in the manner mentioned below,
Next, the test piece was put into an autoclave, and the test piece was subjected to an autoclave treatment under the condition of a temperature of 50°C and a pressure of 0.5 MPa for 15 minutes. After the autoclave treatment, the test piece was taken out of the autoclave, then put into a constant-temperature constant-humidity bath set at a temperature of 60°C and at a humidity of 95% RH, and left therein for 24 hours.
Subsequently, the test piece was taken out of the constant-temperature constant-humidity bath, and left at room temperature (23°C) for 30 minutes. Using a microscope, the test piece was checked for the presence of absence of foaming therein (including foaming caused by impurities). In the case where no foaming was observed in the sample, the anti-foaming release property of the sample was evaluated as good (O); and in the case where some foaming was observed therein, the anti-foaming release property of the sample was evaluated as not good (×). The evaluation results are given to the column of "Anti-foaming release property at 60°C/95% RH" in Table 1.

(4) Step absorbability

A sheet piece having a size of 100 mm length × 50 mm width was cut out from the double-sided pressure-sensitive adhesive sheet.
Next, one separator was peeled from the sheet piece, and using a hand roller (2 kg roller), the sheet piece was laminated to a slide glass (manufactured by Matsunami Glass Industry Ltd., 100 mm length × 50 mm width, thickness 0.7 mm) by moving the roller back and forth once.
Next, the other separator was peeled from the sheet piece which had been laminated to the slide glass, and a glass plate with a printing step was laminated to the sheet piece in such a manner that the surface thereof with the printing step could contact with the pressure-sensitive adhesive surface of the sheet piece under the laminating condition mentioned below, thereby preparing a sample for evaluation.

(Laminating Condition)

Surface pressure: 0.4 MPa
Vacuum degree: 30 Pa
Laminating time: 2 seconds

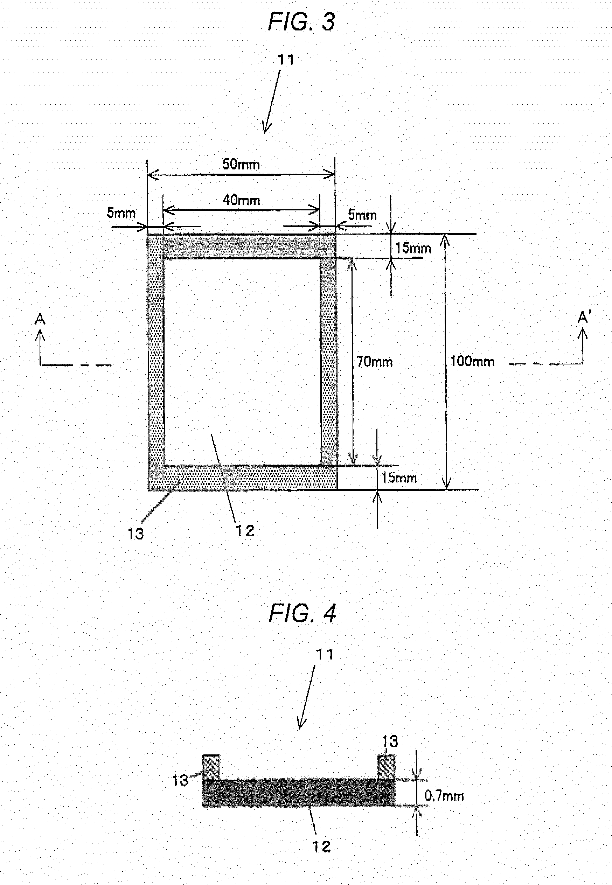

The glass plate with the printing step is a slide glass plate (manufactured by Matsunami Glass Industry Ltd., 100 mm length × 50 mm width, thickness 0.7 mm) that has a frame pattern printed on one surface thereof. In the glass plate with the printing step, the thickness of the printed area (height of the printing step) was from 10 to 13 $\mu$m. An outline view of the glass plate with the printing step is shown in Fig. 3 (plan view) and Fig. 4 (A-A' line-cut end view in Fig. 3). In Fig. 3 and Fig. 4, 11 is a glass plate with printing step, 12 is a slide glass and 13 is a printed area.
Next, the sample for evaluation was put into an autoclave, and the sample was subjected to an autoclave treatment under the condition of a temperature of 50°C and a pressure of 0.5 MPa for 15 minutes.
After the autoclave treatment, the sample for evaluation was taken out and visually checked for the presence or absence of foaming. In the case where the sample had no foaming, the step absorbability of the sample was evaluated as good (O), but in the case where the sample had some foaming, the step absorbability of the sample was evaluated as not good (×).

(5) Humidification whitening resistance

The separator was peeled from the double-sided pressure-sensitive adhesive sheet produced in Examples and Comparative Examples, one pressure sensitive adhesive surface of the double-sided pressure-sensitive adhesive sheet was laminated to a slide glass (trade name "MICRO SLIDE GLASS" manufactured by Matsunami Glass Industry Ltd., Lot Number "S", thickness 1.3 mm, haze 0.1%, ground edges), and the other pressure-sensitive adhesive surface thereof was laminated to a PET film (trade name "A41 00" manufactured by Toyobo Co., Ltd., thickness 100 $\mu$m, haze 0.6%), thereby preparing a test piece having a configuration of "slide glass/acrylic pressure-sensitive adhesive layer/PET film".
The test piece was stored in the environment of 60°C and 95% RH for 120 hours, and taken out in the environment of 23°C and 50% RH. Immediately after taken out (after 0 hours), the appearance of the test piece (having a configuration of "slide glass/acrylic pressure-sensitive adhesive layer/PET film) was visually checked. In the case where no whitening was observed in the sample with an eye, the sample was evaluated as good "O"; but in the case where some whitening was observed therein, the sample was evaluated as not good "×".

(6) Transparency (total light transmittance and haze)

One separator was peeled from the double-sided pressure-sensitive adhesive sheet, and the double-sided pressure-sensitive adhesive sheet was laminated to a slide glass (trade name "SHIROKENMA No. 1" manufactured by Matsunami Glass Industry Ltd., thickness 0.8 to 1.0 mm, total light transmittance 92%, haze 0.2%), and the other separator was peeled, thereby preparing a test piece having a layer configuration of double-sided pressure-sensitive adhesive sheet (acrylic pressure-sensitive adhesive layer/slide glass.
The total light transmittance in a visible light wavelength region and the haze of the test piece were measured, using a haze meter (apparatus name "HM-150" manufactured by Murakami Color Research Laboratory Co., Ltd.).

Table 1

| Acrylic pressure-sensitive adhesive composition | | | | Example | | | | | | |
|---|---|---|---|---|---|---|---|---|---|---|
| | | | | 1 | 2 | 3 | 4 | 5 | 6 | 7 |
| Acrylic pressure-sensitive adhesive composition | Prepolymer composition | Monomer (part by weight) | 2EHA | 99.4 | 94.7 | 94.7 | 99.4 | 99.9 | 90.2 | 86.1 |
| | | | AA | 0.5 | 0.5 | | | | | |
| | | | HEA | | | 0.5 | 0.5 | | 5.2 | 9.5 |
| | | | IBXA | | 4.7 | 4.7 | | | 4.5 | 4.3 |
| | | | NVP | | | | | | | |
| | | Photopolymerization initiator (part by weight) | Irg.184 | 0.05 | 0.05 | 0.05 | 0.05 | 0.05 | 0.05 | 0.05 |
| | | | Irg.651 | 0.05 | 0.05 | 0.05 | 0.05 | 0.05 | 0.05 | 0.05 |
| | Polyfunctional monomer (part by weight) | | HDDA | 0.1 | 0.1 | 0.1 | 0.1 | 0.1 | 0.1 | 0.1 |
| | Silane coupling agent (part by weight) | | KBM-403 | 0.3 | 0.3 | 0.3 | 0.3 | 0.3 | 0.3 | 0.3 |
| | Additional photopolymerization initiator (part by weight) | | Irg.184 | 0.1 | 0.1 | 0.1 | 0.1 | 0.1 | 0.1 | 0.1 |
| | | | Irg.651 | 0.1 | 0.1 | 0.1 | 0.1 | 0.1 | 0.1 | 0.1 |
| 180° Peeling pressure-sensitive adhesive force (N/20 mm) | | | to glass | 2.6 | 2.9 | 4.5 | 3.9 | 2.5 | 5.3 | 6.6 |
| | | | to polarizing film | 1.7 | 1.7 | 2.2 | 2.0 | 2.0 | 2.8 | 3.2 |
| Gel fraction of acrylic pressure-sensitive adhesive layer (wt%) | | | | 71.3 | 73.5 | 71.0 | 70.9 | 68.4 | 68.0 | 68.0 |
| Reworkability | | | Removing test | ○ | ○ | ○ | ○ | ○ | × | × |
| | | | Test with reworking apparatus | ○ | ○ | ○ | ○ | ○ | ○ | ○ |
| Anti-foaming release property | | | 85°C | ○ | ○ | ○ | ○ | ○ | ○ | ○ |
| | | | 60°C/95% RH | ○ | ○ | ○ | ○ | ○ | ○ | ○ |
| Step absorbability | | | | ○ | ○ | ○ | ○ | ○ | ○ | ○ |
| Humidification whitening resistance | | | | × | × | × | × | × | ○ | ○ |
| Transparency | | | Total light transmittance (%) | 92 | 92 | 92 | 92 | 92 | 92 | 92 |
| | | | Haze (%) | 0.5 | 0.5 | 0.5 | 0.5 | 0.5 | 0.5 | 0.5 |

| | | | | Comparative Example | | | |
|---|---|---|---|---|---|---|---|
| | | | | 1 | 2 | 3 | 4 |
| Acrylic pressure-sensitize adhesive composition | Prepolymer composition | Monomer (part by weight) | 2EHA | 95.5 | 95.9 | 97.9 | 68.0 |
| | | | AA | 4.0 | 4.0 | 2.0 | |
| | | | HEA | | | | 17.5 |
| | | | IBXA | | | | |
| | | | NVP | | | | 14.5 |
| | | Photopolymerization initiator (part by weight) | Irg.184 | 0.05 | 0.05 | 0.05 | 0.035 |
| | | | Irg.651 | 0.05 | 0.05 | 0.05 | 0.035 |
| | Polyfunctional monomer (part by weight) | | HDDA | 0.5 | 0.1 | 0.1 | 0.25 |
| | Silane coupling agent (part by weight) | | KBM-403 | 0.3 | 0.3 | 0.3 | 0.3 |
| | Additional photopolymerization initiator (part by weight) | | Irg.184 | 0.1 | 0.1 | 0.1 | |
| | | | Irg.651 | 0.1 | 0.1 | 0.1 | |
| 180° Peeling pressure-sensitive adhesive force (N/20 mm) | | | to glass | 1.2 | 3.5 | 3.3 | 16.0 |
| | | | to polarizing film | 0.7 | 2.7 | 2.1 | 10.0 |
| Gel fraction of acrylic pressure-sensitive adhesive layer (wt%) | | | | 95.5 | 75.6 | 74.1 | 90.0 |
| Reworkability | | Removing test | | × | × | × | × |
| | | Test with reworking apparatus | | ○ | ○ | ○ | × |
| Anti-foaming release property | | | 85°C | ○ | ○ | ○ | ○ |
| | | | 60°C/95% RH | ○ | ○ | ○ | ○ |
| Step absorbability | | | | × | × | × | ○ |
| Humidification whitening resistance | | | | × | × | × | ○ |
| Transparency | | | Total light transmittance (%) | 92 | 92 | 92 | 92 |
| | | | Haze (%) | 0.5 | 0.5 | 0.5 | 0.5 |

EP 2 540 787 A1

22

The abbreviations in Table 1 are as follows:

(Monomer Components)

2EHA: 2-ethylhexyl acrylate
AA: acrylic acid
HEA: 2-hydroxyethyl acrylate
IBXA: isobornyl acrylate
NVP: N-vinyl-2-pyrrolidone
HDDA: hexanediol diacrylate

(Photopolymerization Initiator)

Irg.184: trade name, "IRGACURE 184" manufactured by Ciba Specialty Chemicals
Irg.651: trade name, "IRGACURE 651" manufactured by Ciba Specialty Chemicals

(Silane Coupling Agent)

KBM-403: trade name "KBM-403'" manufacture by Shin-Etsu Chemical Industry Co., Ltd.

As obvious from the results in Table 1, the double-sided pressure-sensitive adhesive sheets of the present invention (Examples 1 to 5) were all excellent in reworkability, anti-foaming release property and step absorbability. In the removing test, the adherend A and the adherend B were separated in such a manner that the pressure-sensitive adhesive remained on both of the adhered A and the adherend B.

On the other hand, the double-sided pressure-sensitive adhesive sheets having only the acrylic pressure-sensitive adhesive sheet having a high gel fraction (Comparative Examples 1, 2) and the double-sided pressure-sensitive adhesive sheet having only an acrylic pressure-sensitive adhesive layer in which the content of the polar group-containing monomer in the monomer components was large (Comparative Example 3) were poor in reworkability and step absorbability.

In addition, the double-sided pressure-sensitive adhesive sheets of the present invention (Examples 6 and 7) were excellent in anti-foaming release property, step absorbability and humidification whitening resistance, and were not inferior to the double-sided pressure-sensitive adhesive sheets of Comparative Examples 1 to 3 in point of reworkability.

Further, in their production, the double-sided pressure-sensitive adhesive sheets of the present invention (Examples) were free from a trouble of the attachment of the pressure-sensitive adhesive to the cutting blade when they were cut, that is, they were all good in point of processability. Above all, the sheets where isobornyl acrylate was used as the monomer component (Examples 2, 3) were especially excellent in processability.

While the invention has been described in detail and with reference to specific embodiments thereof, it will be apparent to one skilled in the art that various changes and modifications can be made therein without departing from the spirit and scope thereof.

This application is based on Japanese Patent Application No. 2011-142649 filed on June 28, 2011 and Japanese Patent Application No. 2012-030973 filed on February 15, 2012, the entire subject matter of which is incorporated herein by reference.

The present invention provides the following optical double-sided pressure-sensitive adhesive sheet, optical member, touch panel, image display device and separating method.

(1) An optical double-sided pressure-sensitive adhesive sheet comprising an acrylic pressure-sensitive adhesive layer which contains an acrylic polymer (X), wherein:

the acrylic polymer (X) is formed from a monomer component comprising an alkyl (meth)acrylate having a linear or branched alkyl group having 1 to 14 carbon atoms,
a content of the alkyl (meth)acrylate having a linear or branched alkyl group having 1 to 14 carbon atoms is from 50 to 100 wt% based on a total amount of the monomer component (100 wt%) forming the acrylic polymer (X), and a content of a polar group-containing monomer is from 0 to 15.0 wt% based on a total amount of the monomer component (100 wt%) forming the acrylic polymer (X), and
a gel fraction of the acrylic pressure-sensitive adhesive layer is from 20 to 74 wt%.

(2) The optical double-sided pressure-sensitive adhesive sheet according to (1), wherein the polar group-containing monomer is selected from the group consisting of a carboxyl group-containing monomer, a hydroxyl group-containing monomer and a nitrogen atom-containing monomer.

(3) The optical double-sided pressure-sensitive adhesive sheet according to (1) or (2), wherein the monomer component forming the acrylic polymer (X) further comprises an alicyclic monomer, and a content of the alicyclic monomer is 0.5 wt% or more and less than 10 wt% based on a total amount of the monomer component (100 wt%) forming the acrylic polymer (X).

(4) The optical double-sided pressure-sensitive adhesive sheet according to any one of (1) to (3), wherein the acrylic polymer (X) is formed by an active energy-ray polymerization.

(5) The optical double-sided pressure-sensitive adhesive sheet according to any one of (1) to (4), which is a substrateless double-sided pressure-sensitive adhesive sheet consisting of the acrylic pressure-sensitive adhesive layer.

(6) The optical double-sided pressure-sensitive adhesive sheet according to any one of (1) to (5), which has a total light transmittance of 87% or more and a haze of 3.0% or less.

(7) The optical double-sided pressure-sensitive adhesive sheet according to any one of (1) to (6), wherein an adherend A and an adherend B, which are laminated through the optical double-sided pressure-sensitive adhesive sheet, can be separated in the following removing test, and after the adherend A and the adherend B are separated from each other, a pressure-sensitive adhesive remains on both of the adherend A and the adherend B:

Removing test: one pressure-sensitive adhesive surface of the optical double-sided pressure-sensitive adhesive sheet (size: 100 mm length × 50 mm width) is laminated to a surface of a polarizing film of the following adherend A and the other pressure-sensitive adhesive surface thereof is laminated to a surface of the following adherend B, thereby preparing a test piece (size: 100 mm length × 50 mm width) having a configuration of slide glass/ polarizing film/optical double-sided pressure-sensitive adhesive sheet/slide glass, and the test piece is left in the environment of 23°C and 50% RH for 1 hour, and thereafter, while the adherend A is fixed, the adherend B is rotated in the plane perpendicular to the thickness direction of the optical double-sided pressure-sensitive adhesive sheet to thereby separate the adherend B from the adherend A;
adherend A: a laminate (size: 100 mm length × 50 mm width) of a slide glass (thickness 0.7 mm, size: 100 mm length × 50 mm width) and a polarizing film (size: 100 mm length × 50 mm width);
adherend B: a slide glass (thickness 0.7 mm, size: 100 mm length × 50 mm width).

(8) An optical member comprising the optical double-sided pressure-sensitive adhesive sheet according to any one of (1) to (7).

(9) A touch panel comprising the optical double-sided pressure-sensitive adhesive sheet according to any one of (1) to (7).

(10) An image display device comprising the optical double-sided pressure-sensitive adhesive sheet according to any one of (1) to (7).

(11) A separating method, comprising separating two optical members laminated through the optical double-sided pressure-sensitive adhesive sheet according to any one of (1) to (7).

(12) The separating method according to (11), wherein the two optical members are moved relatively parallel to each other thereby producing a shear stress to break the optical double-sided pressure-sensitive adhesive sheet.

Description of Reference Numerals and Signs

1　　Test Piece
2　　Stainless plate
3　　Fixed base
11　Glass plate with printing step
12　Slide glass
13　Printed area

Claims

1. An optical double-sided pressure-sensitive adhesive sheet comprising an acrylic pressure-sensitive adhesive layer which contains an acrylic polymer (X), wherein:

the acrylic polymer (X) is formed from a monomer component comprising an alkyl (meth)acrylate having a linear or branched alkyl group having 1 to 14 carbon atoms,

a content of the alkyl (meth)acrylate having a linear or branched alkyl group having 1 to 14 carbon atoms is from 50 to 100 wt% based on a total amount of the monomer component (100 wt%) forming the acrylic polymer (X), and a content of a polar group-containing monomer is from 0 to 15.0 wt% based on a total amount of the monomer component (100 wt%) forming the acrylic polymer (X), and

a gel fraction of the acrylic pressure-sensitive adhesive layer is from 20 to 74 wt%.

2. The optical double-sided pressure-sensitive adhesive sheet according to claim 1, wherein the polar group-containing monomer is selected from the group consisting of a carboxyl group-containing monomer, a hydroxyl group-containing monomer and nitrogen atom-containing monomer.

3. The optical double-sided pressure-sensitive adhesive sheet according to claim 1 or 2, wherein the monomer component forming the acrylic polymer (X) further comprises an alicyclic monomer in an amount of 0.5 wt% or more and less than 10 wt% based on a total amount of the monomer component (100 wt%) forming the acrylic polymer (X).

4. The optical double-sided pressure-sensitive adhesive sheet according to any one of claims 1 to 3, wherein the acrylic polymer (X) is formed by an active energy-ray polymerization.

5. The optical double-sided pressure-sensitive adhesive sheet according to any one of claims 1 to 4, which is a substrateless double-sided pressure-sensitive adhesive sheet consisting of the acrylic pressure-sensitive adhesive layer.

6. The optical double-sided pressure-sensitive adhesive sheet according to any one of claims 1 to 5, which has a total light transmittance of 87% or more and a haze of 3.0% or less.

7. The optical double-sided pressure-sensitive adhesive sheet according to any one of claims 1 to 6, wherein an adherend A and an adherend B, which are laminated through the optical double-sided pressure-sensitive adhesive sheet, can be separated in the following removing test, and after the adherend A and the adherend B are separated from each other, a pressure-sensitive adhesive remains on both of the adherend A and the adherend B:

Removing test: one pressure-sensitive adhesive surface of the optical double-sided pressure-sensitive adhesive sheet (size: 100 mm length × 50 mm width) is laminated to a surface of a polarizing film of the following adherend A and the other pressure-sensitive adhesive surface thereof is laminated to a surface of the following adherend B, thereby preparing a test piece (size: 100 mm length × 50 mm width) having a configuration of slide glass/ polarizing film/optical double-sided pressure-sensitive adhesive sheet/slide glass, and the test piece is left in the environment of 23°C and 50% RH for 1 hour, and thereafter, while the adherend A is fixed, the adherend B is rotated in the plane perpendicular to the thickness direction of the optical double-sided pressure-sensitive adhesive sheet to thereby separate the adherend B from the adherend A;
adherend A: a laminate (size: 100 mm length × 50 mm width) of a slide glass (thickness 0.7 mm, size: 100 mm length × 50 mm width) and a polarizing film (size: 100 mm length × 50 mm width);
adherend B: a slide glass (thickness 0.7 mm, size: 100 mm length × 50 mm width).

8. An optical member comprising the optical double-sided pressure-sensitive adhesive sheet according to any one of claims 1 to 7.

9. A touch panel comprising the optical double-sided pressure-sensitive adhesive sheet according to any one of claims 1 to 7.

10. An image display device comprising the optical double-sided pressure-sensitive adhesive sheet according to any one of claims 1 to 7.

11. A separating method, comprising separating two optical members laminated through the optical double-sided pressure-sensitive adhesive sheet according to any one of claims 1 to 7.

12. The separating method according to claim 11, wherein the two optical members are moved relatively parallel to each other thereby producing a shear stress to break the optical double-sided pressure-sensitive adhesive sheet.

*FIG. 1*

*FIG. 2*

## FIG. 3

## FIG. 4

Europäisches
Patentamt

European
Patent Office

Office européen
des brevets

# EUROPEAN SEARCH REPORT

Application Number

EP 12 17 3827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/129658 A1 (SUZUKI TATSUYA [JP] ET AL) 27 May 2010 (2010-05-27)<br>* paragraph [0006] *<br>* paragraph [0056] - paragraph [0061] *<br>* paragraph [0064] *<br>* paragraph [0121] - paragraph [0123]; example 4 *<br>* paragraph [0126] - paragraph [0128]; example 6 *<br>* paragraph [0131] - paragraph [0133]; example 8 *<br>* claims 1-20 *<br>----- | 1,2,4-12 | INV.<br>C09J7/00<br>C09J133/06<br>C09J133/14<br>C09J7/02 |
| X | EP 1 845 145 A1 (NITTO DENKO CORP [JP]) 17 October 2007 (2007-10-17)<br>* paragraph [0005] *<br>* paragraph [0135] - paragraph [0137]; example 1 *<br>* paragraph [0147] - paragraph [0154]; examples 6-9 *<br>* paragraph [0159] - paragraph [0164]; examples 12-14 *<br>* paragraph [0188]; examples 6-9 and 12-14; table 1 *<br>----- | 1-3,7 | |
| | | | TECHNICAL FIELDS SEARCHED (IPC)<br><br>C09J |
| X | EP 2 325 272 A2 (NITTO DENKO CORP [JP]) 25 May 2011 (2011-05-25)<br>* paragraph [0005] *<br>* paragraph [0008] *<br>* paragraph [0010] - paragraph [0013] *<br>* paragraph [0097] - paragraph [0100]; examples 3, 4 and Comparative Examples 1, 2 *<br>* page 17; examples 3, 4 and Comparative Examples 1, 2; table 1 *<br>* page 18; examples 3, 4 and Comparative Examples 1, 2; table 2 *<br>-----<br>-/-- | 1,2,4-10 | |

The present search report has been drawn up for all claims

| Place of search | Date of completion of the search | Examiner |
|---|---|---|
| Munich | 23 October 2012 | Siemsen, Beatrice |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 12 17 3827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/125972 A1 (NITTO DENKO CORP [JP]; HANAKI IKKOU [JP]; SAITOU YUKI [JP]; YAMANAKA T) 4 November 2010 (2010-11-04) <br> * paragraph [0009] * <br> * paragraph [0017] * <br> * paragraph [0020] - paragraph [0021] * <br> * paragraph [0073] * <br> * claim 1 * | 1,2,7 | |
| X,P | & EP 2 425 968 A1 (NITTO DENKO CORP [JP]) 7 March 2012 (2012-03-07) <br> * paragraph [0009] * <br> * paragraph [0017] * <br> * paragraph [0020] - paragraph [0021] * <br> * paragraph [0073] * <br> * claims 1, 2 * | 1,2,7 | |
| E | EP 2 479 230 A1 (NITTO DENKO CORP [JP]) 25 July 2012 (2012-07-25) <br> * paragraph [0002] * <br> * paragraph [0007] * <br> * paragraph [0011] * <br> * paragraph [0036] * <br> * paragraph [0038] * <br> * paragraph [0040] - paragraph [0042] * <br> * paragraph [0050] * <br> * paragraph [0097] - paragraph [0100]; examples 1, 2 * <br> * paragraph [0102]; example 4 * <br> * page 18; examples 1, 2, 4; table 1 * | 1,2,4-10 | TECHNICAL FIELDS SEARCHED (IPC) |

The present search report has been drawn up for all claims

| Place of search | Date of completion of the search | Examiner |
|---|---|---|
| Munich | 23 October 2012 | Siemsen, Beatrice |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 12 17 3827

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2012

| Patent document cited in search report | | Publication date | Patent family member(s) | | Publication date |
|---|---|---|---|---|---|
| US 2010129658 | A1 | 27-05-2010 | CN | 101734000 A | 16-06-2010 |
| | | | JP | 2010121134 A | 03-06-2010 |
| | | | KR | 20100057521 A | 31-05-2010 |
| | | | TW | 201026506 A | 16-07-2010 |
| | | | US | 2010129658 A1 | 27-05-2010 |
| EP 1845145 | A1 | 17-10-2007 | CN | 101077962 A | 28-11-2007 |
| | | | EP | 1845145 A1 | 17-10-2007 |
| | | | JP | 2007302868 A | 22-11-2007 |
| | | | KR | 20070101144 A | 16-10-2007 |
| | | | US | 2007237949 A1 | 11-10-2007 |
| EP 2325272 | A2 | 25-05-2011 | CN | 102051133 A | 11-05-2011 |
| | | | EP | 2325272 A2 | 25-05-2011 |
| | | | JP | 2011099073 A | 19-05-2011 |
| | | | KR | 20110051151 A | 17-05-2011 |
| | | | TW | 201124499 A | 16-07-2011 |
| | | | US | 2011111220 A1 | 12-05-2011 |
| WO 2010125972 | A1 | 04-11-2010 | CN | 102414018 A | 11-04-2012 |
| | | | EP | 2425968 A1 | 07-03-2012 |
| | | | JP | 2010253889 A | 11-11-2010 |
| | | | US | 2012045641 A1 | 23-02-2012 |
| | | | WO | 2010125972 A1 | 04-11-2010 |
| EP 2479230 | A1 | 25-07-2012 | CN | 102618179 A | 01-08-2012 |
| | | | EP | 2479230 A1 | 25-07-2012 |
| | | | JP | 2012153788 A | 16-08-2012 |
| | | | US | 2012189835 A1 | 26-07-2012 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003238915 A
- JP 2003342542 A
- JP 2004231723 A
- JP 2011099078 A

- JP 2002069411 A
- JP 2010121134 A
- JP 2011142649 A
- JP 2012030973 A

**Non-patent literature cited in the description**

- Polymer Handbook. John Wiley & Sons, Inc, 1989